# EUROPEAN PATENT APPLICATION

(11) **EP 4 615 138 A1**
(43) Date of publication of application: **10.09.2025**
(21) Application number: 23886291.6
(22) Date of filing: 01.11.2023
(51) Int. Cl.: H04W 74/08, H04W 72/50, H04W 72/25, H04W 24/08, H04W 92/18

(54) **METHOD AND DEVICE FOR PERFORMING COT SHARING OPERATION BETWEEN TERMINALS IN SHARED SPECTRUM**

(30) Priority: 01.11.2022 US 202263421556 P
(71) Applicant: LG Electronics Inc., Yeongdeungpo-gu Seoul 07336 (KR)
(72) Inventor: LEE, Seungmin, Seoul 06772 (KR); HWANG, Daesung, Seoul 06772 (KR)
(74) Representative: Mooser, Sebastian Thomas
(86) International application number: PCT/KR2023/017309
(87) International publication number: WO 2024/096595

(57) **Abstract**

Proposed is a method for operating a first device (100) in a wireless communication system. The method may comprise the steps of: determining to perform wireless communication in a shared spectrum, wherein, on the basis of determining to perform the wireless communication in the shared spectrum, a first SCI includes a field related to whether to perform a COT sharing operation, and determining whether to perform the COT sharing operation, wherein, on the basis of determining to perform the COT sharing operation, a value of the field related to whether to perform the COT sharing operation is set to 1.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an entity having an infrastructure (or infra) established therein, and so on. The V2X may be spread into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

According to an embodiment of the present disclosure, a method for performing, by a first device, wireless communication may be proposed. For example, the method may comprise: determining to perform the wireless communication in a shared spectrum, wherein first sidelink control information, SCI, may include a field related to whether a channel occupancy time, COT, sharing operation is performed, based on the wireless communication being determined to be performed in the shared spectrum; determining whether to perform the COT sharing operation, wherein a value of the field related to whether the COT sharing operation is performed may be set to 1, based on the COT sharing operation being determined to be performed; and transmitting, to a second device, the first SCI through a physical sidelink control channel, PSCCH, based on a first resource within a first resource block, RB, set.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining to perform the wireless communication in a shared spectrum, wherein first sidelink control information, SCI, may include a field related to whether a channel occupancy time, COT, sharing operation is performed, based on the wireless communication being determined to be performed in the shared spectrum; determining whether to perform the COT sharing operation, wherein a value of the field related to whether the COT sharing operation is performed may be set to 1, based on the COT sharing operation being determined to be performed; and transmitting, to a second device, the first SCI through a physical sidelink control channel, PSCCH, based on a first resource within a first resource block, RB, set.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations, wherein the operations may comprise: determining to perform the wireless communication in a shared spectrum, wherein first sidelink control information, SCI, may include a field related to whether a channel occupancy time, COT, sharing operation is performed, based on the wireless communication being determined to be performed in the shared spectrum; determining whether to perform the COT sharing operation, wherein a value of the field related to whether the COT sharing operation is performed may be set to 1, based on the COT sharing operation being determined to be performed; and transmitting, to a second UE, the first SCI through a physical sidelink control channel, PSCCH, based on a first resource within a first resource block, RB, set.

According to an embodiment of the present disclosure, a non-transitory computer-readable storage medium storing instructions may be proposed. For example, the instructions, based on being executed, may cause a first device to: determine to perform the wireless communication in a shared spectrum, wherein first sidelink control information, SCI, may include a field related to whether a channel occupancy time, COT, sharing operation is performed, based on the wireless communication being determined to be performed in the shared spectrum; determine whether to perform the COT sharing operation, wherein a value of the field related to whether the COT sharing operation is performed may be set to 1, based on the COT sharing operation being determined to be performed; and transmit, to a second device, the first SCI through a physical sidelink control channel, PSCCH, based on a first resource within a first resource block, RB, set.

According to an embodiment of the disclosure, a method for performing, by a second device, wireless communication may be proposed. For example, the method may comprise: receiving, from a first device, first sidelink control information, SCI, through a physical sidelink control channel, PSCCH, based on a first resource within a first resource block, RB, set, wherein the wireless communication may be performed in a shared spectrum, and wherein the first SCI may include a field related to whether a channel occupancy time, COT, sharing operation is performed, based on the wireless communication being determined to be performed in the shared spectrum.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, first sidelink control information, SCI, through a physical sidelink control channel, PSCCH, based on a first resource within a first resource block, RB, set, wherein the wireless communication may be performed in a shared spectrum, and wherein the first SCI may include a field related to whether a channel occupancy time, COT, sharing operation is performed, based on the wireless communication being determined to be performed in the shared spectrum.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a wireless communication system supporting an unlicensed band, according to one embodiment of the present disclosure.
FIG. 11 shows a method of occupying resources in an unlicensed band, based on an embodiment of the present disclosure.
FIG. 12 shows a case in which a plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows a method in which a UE that has reserved transmission resource(s) informs another UE of the transmission resource(s), according to an embodiment of the present disclosure.
FIG. 16 shows a structure of first SCI whose fields it includes are different according to the spectrum in which SL communication is performed, according to one embodiment of the present disclosure.
FIG. 17 shows a structure of second SCI whose included field is different according to the value set in the COT sharing flag field of first SCI, according to one embodiment of the present disclosure.
FIG. 18 shows a procedure for a first device to perform wireless communication, according to one embodiment of the present disclosure.
FIG. 19 shows a procedure for a first device to perform wireless communication, according to one embodiment of the present disclosure.
FIG. 20 shows a communication system 1, based on an embodiment of the present disclosure.
FIG. 21 shows wireless devices, based on an embodiment of the present disclosure.
FIG. 22 shows a signal process circuit for a transmission signal, based on an embodiment of the present disclosure.
FIG. 23 shows another example of a wireless device, based on an embodiment of the present disclosure.
FIG. 24 shows a hand-held device, based on an embodiment of the present disclosure.
FIG. 25 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with a machine learning capability. The vision of the 6G system can be in four aspects: intelligent connectivity, deep connectivity, holographic connectivity, and ubiquitous connectivity, and the 6G system may satisfy the requirements as shown in Table 1 below. In other words, Table 1 is an example of the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G system may have key factors such as eMBB(Enhanced mobile broadband), URLLC(Ultra-reliable low latency communications), mMTC(massive machine-type communication), AI integrated communication, Tactile internet, High throughput, High network capacity, High energy efficiency, Low backhaul and access network congestion, Enhanced data security.

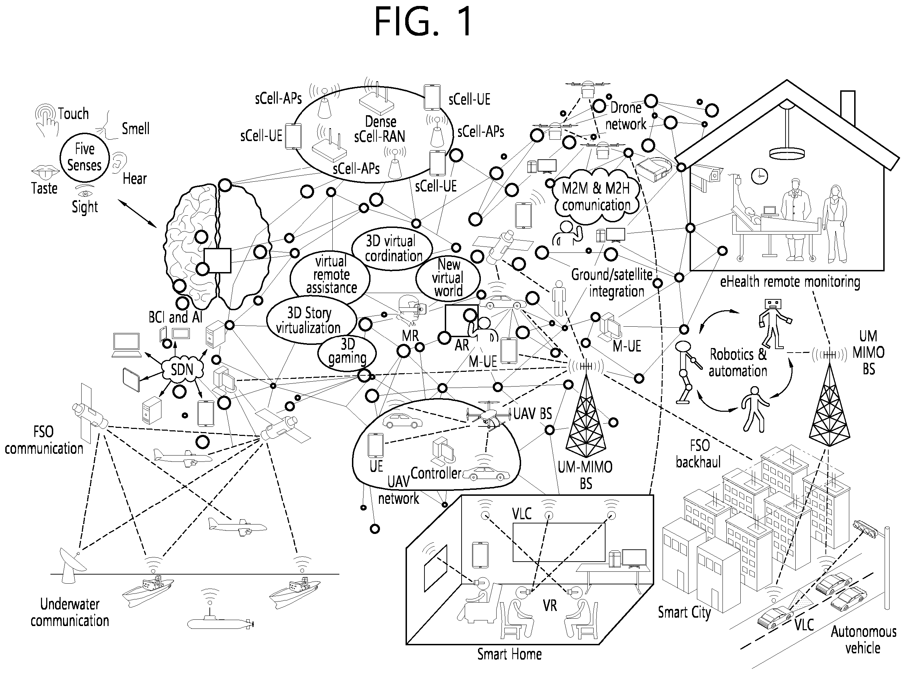

FIG. 1 shows a communication structure that can be provided in a 6G system, according to one embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications by providing end-to-end delay of less than 1 ms. In 6G systems, volumetric spectral efficiency will be much better, as opposed to the area spectral efficiency often used today. 6G systems will be able to offer very long battery life and advanced battery technologies for energy harvesting, so mobile devices will not need to be recharged separately in 6G systems. In 6G, new network characteristics may be as follows.
- Satellites integrated network: To provide a global mobile population, 6G is expected to be integrated with satellite. The integration of terrestrial, satellite, and airborne networks into a single wireless communication system is important for 6G.
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer: 6G wireless networks will deliver power to charge batteries of devices such as smartphones and sensors. Therefore, wireless information and energy transfer (WIET) will be integrated.
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- small cell networks: The idea of small cell networks was introduced in cellular systems to improve received signal quality as a result of improved processing throughput, energy efficiency, and spectral efficiency. As a result, small cell networks are an essential characteristic for communication systems over 5G and beyond 5G (5GB). Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connection is characterized by high-capacity backhaul networks to support large volumes of traffic. High-speed fiber optics and free-space optics (FSO) systems may be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwareization and virtualization are two important features that are fundamental to the design process in a 5GB network to ensure flexibility, reconfigurability, and programmability. In addition, billions of devices may be shared on a shared physical infrastructure.

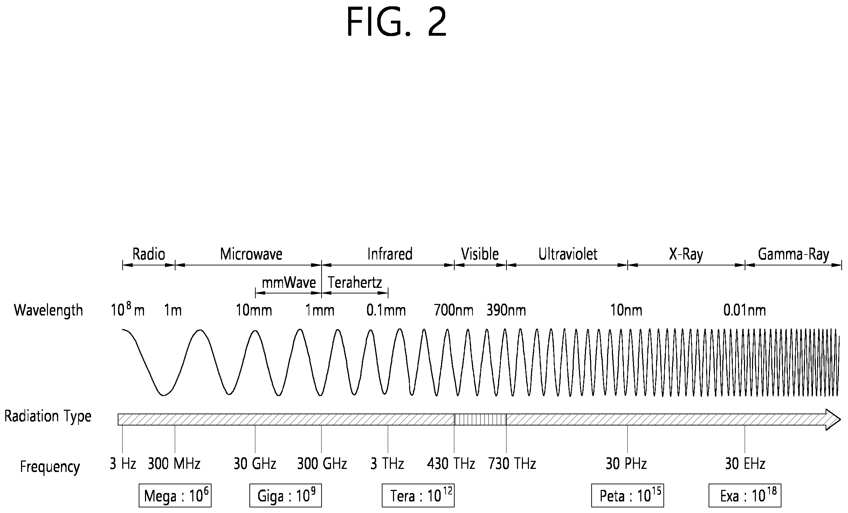

The following describes the core implementation technologies for 6G systems.
- Artificial Intelligence: The most important and new technology that will be introduced in the 6G system is AI. The 4G system did not involve AI. 5G systems will support partial or very limited AI. However, 6G systems will be fully AI-enabled for automation. Advances in machine learning will create more intelligent networks for real-time communication in 6G. The introduction of AI in telecommunications may streamline and improve real-time data transmission. AI may use numerous analytics to determine the way complex target operations are performed, which means AI can increase efficiency and reduce processing delays. Time-consuming tasks such as handover, network selection, and resource scheduling can be done instantly by using AI. AI may also play an important role in M2M, machine-to-human, and human-to-machine communications. In addition, AI may become a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Bmeaforming
- Optical wireless technology
- FSO Backhaul Network
- Non-Terrestrial Networks, NTN
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving, Self-driving: For perfect autonomous driving, vehicles must communicate with each other to inform each other of dangerous situations, or with infrastructure such as parking lots and traffic lights to check information such as the location of parking information and signal change times. Vehicle to Everything (V2X), a key element in building an autonomous driving infrastructure, is a technology that allows vehicles to communicate and share information with various elements on the road, in order to perform autonomous driving, such as vehicle-to-vehicle (V2V) wireless communication and vehicle-to-infrastructure (V2I) wireless communication. In order to maximize the performance of autonomous driving and ensure high safety, fast transmission speeds and low latency technologies are essential. In addition, in the future, autonomous driving will go beyond delivering warnings or guidance messages to a driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For the sake of clarity, the description focuses on 5G NR, but the technical ideas of one embodiment of the present disclosure are not limited thereto. Various embodiments of the present disclosure may also be applicable to 6G communication systems.

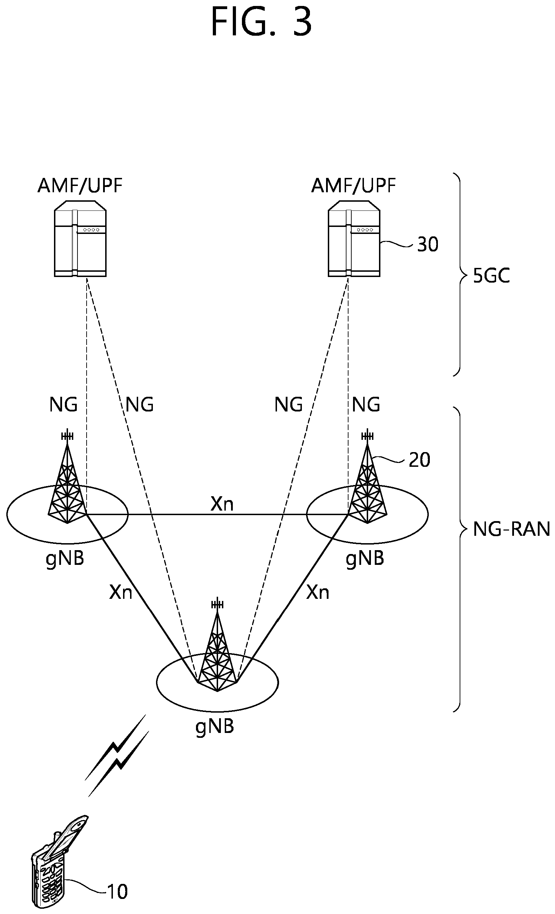

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

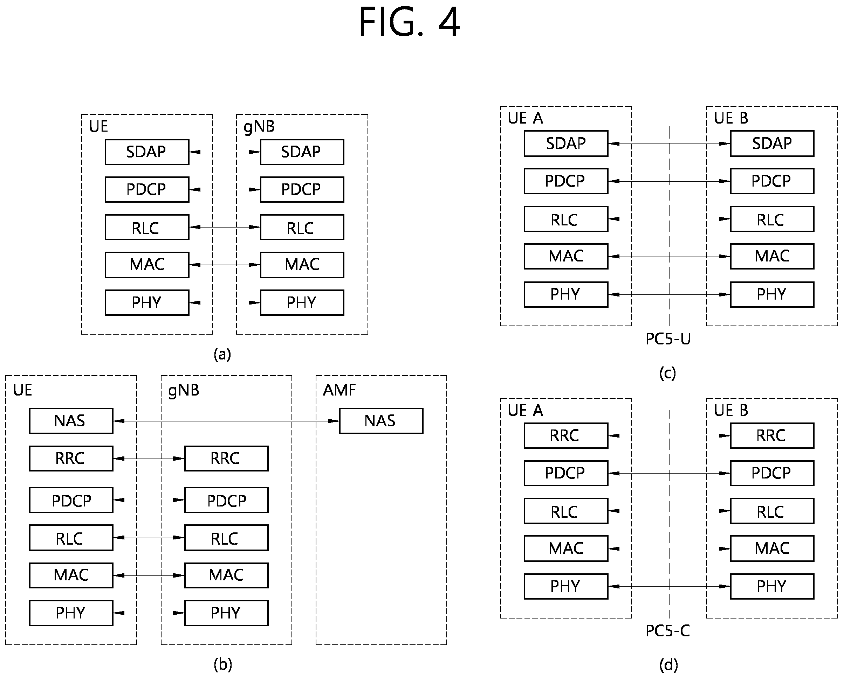

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

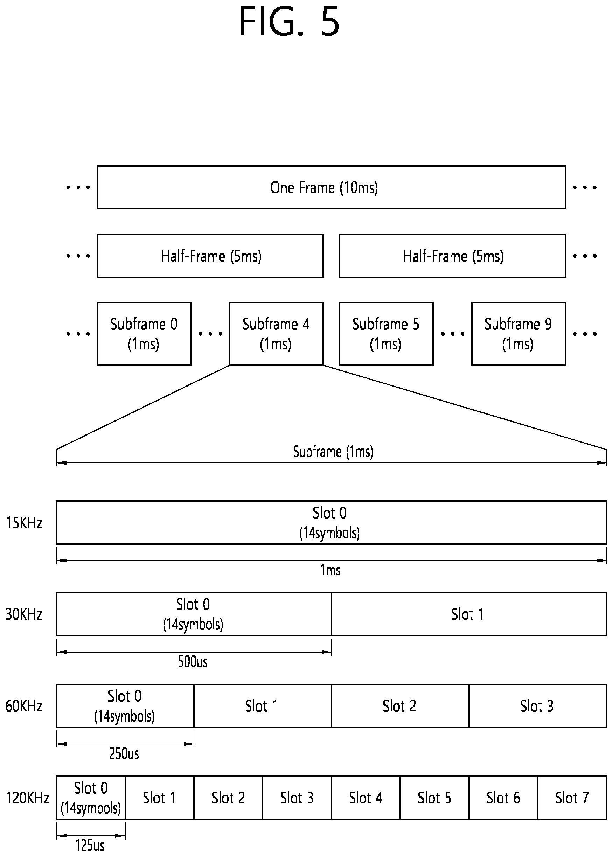

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), number of slots per frame (N^{frame,u}ₛₗₒₜ), and number of slots per subframe (N^{subframe,u}ₛₗₒₜ), depending on the SCS configuration (u), when Normal CP or Extended CP is used.

**[Table 2]**

| CP type | SCS (15*2^{u}) | N^{slot}_{syrnb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

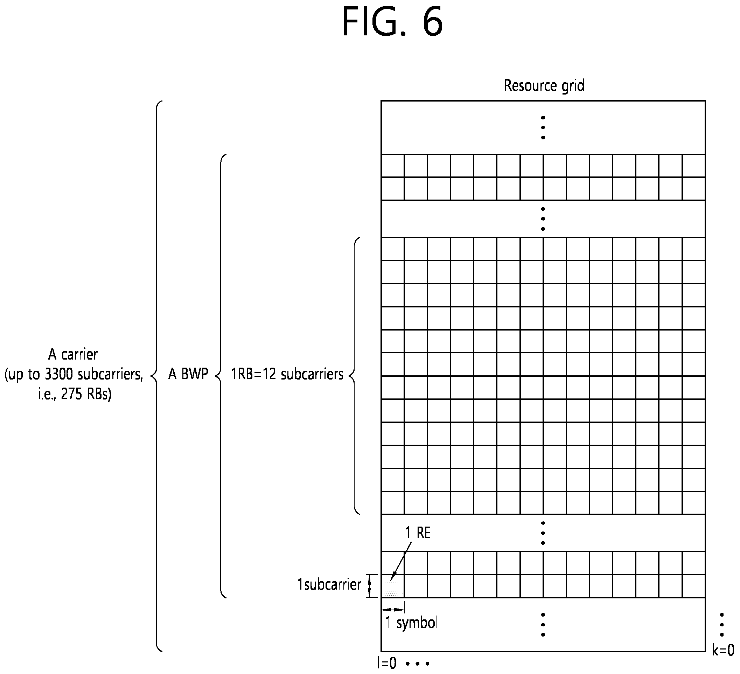

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on).

A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

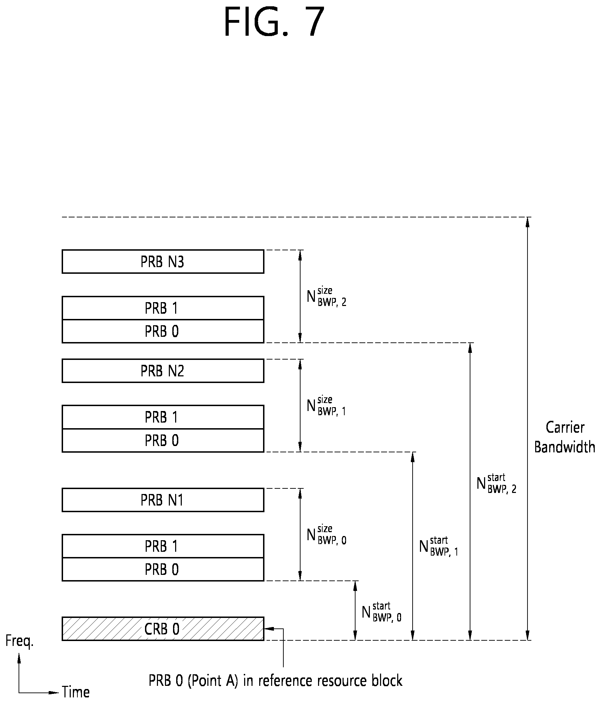

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{stan}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

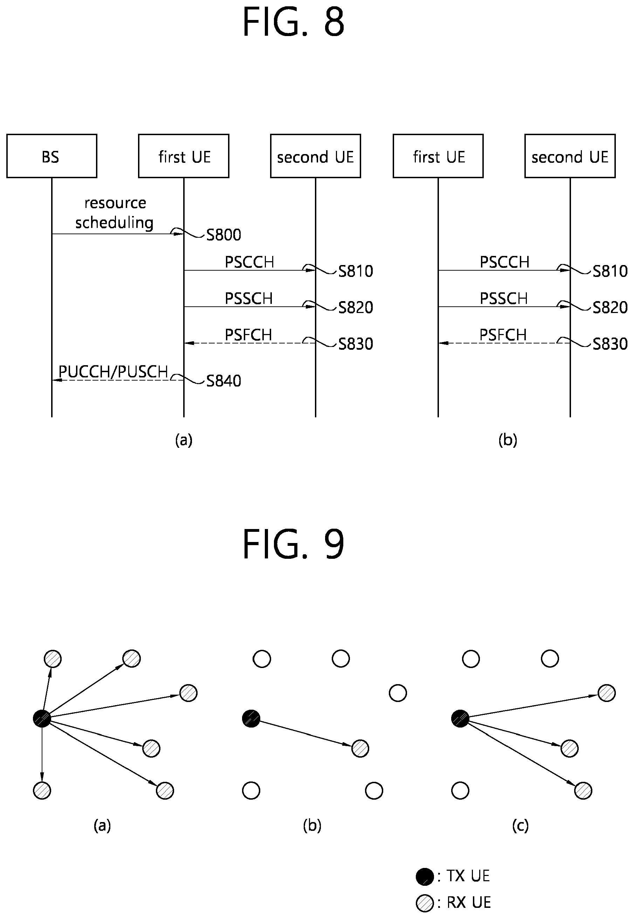

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format. For example, the 1st-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 6
- Beta_offset indicator - 2 bits as provided by higher layer parameter sl-BetaOffsets2ndSCI
- Number of DMRS port - 1 bit as defined in Table 7
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, in accordance with an embodiment of the present disclosure. The embodiment of FIG. 9 may be combined with various embodiments of the present disclosure.

Specifically, FIG. 9(a) shows broadcast-type SL communication, FIG. 9(b) shows unicast type-SL communication, and FIG. 9(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

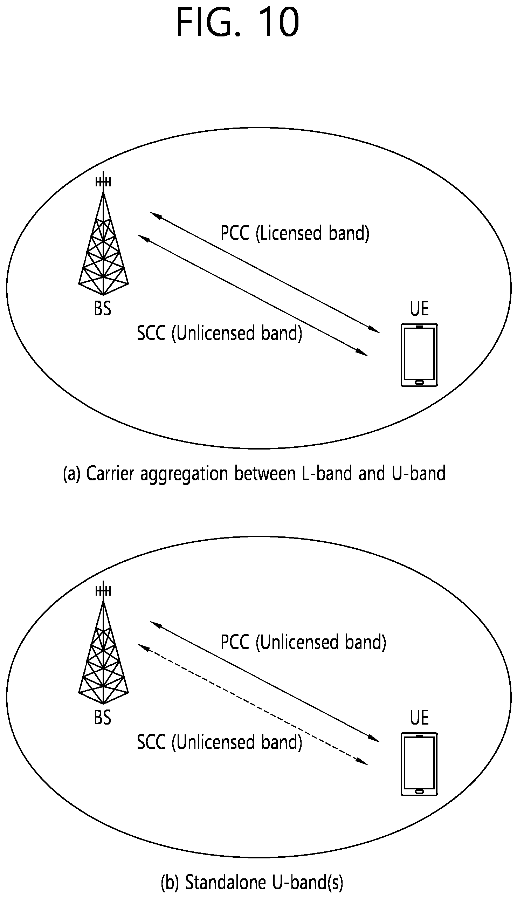

FIG. 10 shows an example of a wireless communication system supporting an unlicensed band, according to one embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tₛ₁ = 9 us. The base station or the UE senses a channel during a sensing slot duration. If power detected for at least 4 us within the sensing slot duration is less than an energy detection threshold Xₜₕᵣₑₛₕ, the sensing slot duration Tₛ₁ is considered to be idle. Otherwise, the sensing slot duration Tₛ₁ = 9 us is considered to be busy. CAP may also be referred to as listen before talk (LBT). For example, a channel access procedure (CAP) may include an LBT, and channel sensing may be performed to monitor the power of that channel during a specific time interval (channel sensing interval) for the CAP.
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

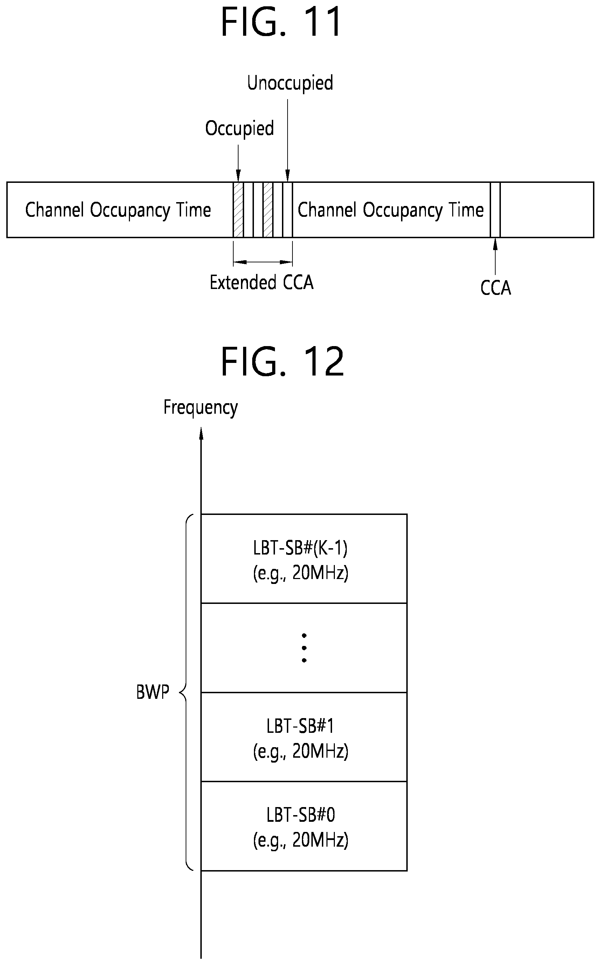

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is the that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT. For example, a channel access procedure (CAP) may include an LBT, and channel sensing may be performed to monitor the power of that channel during a specific time interval (channel sensing interval) for the CAP.

Table 8 shows an example of the channel access procedure (CAP) supported in NR-U.

**[Table 8]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP - Type 2A, 2B, 2C | CAP without random back-off |
| | | - time duration spanned by sensing slots that are sensed to be idle before an uplink or sidelink transmission(s) is deterministic |

Referring to Table 8, the LBT type or CAP for DL/UL/SL transmission may be defined. However, Table 8 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 9 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 9]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

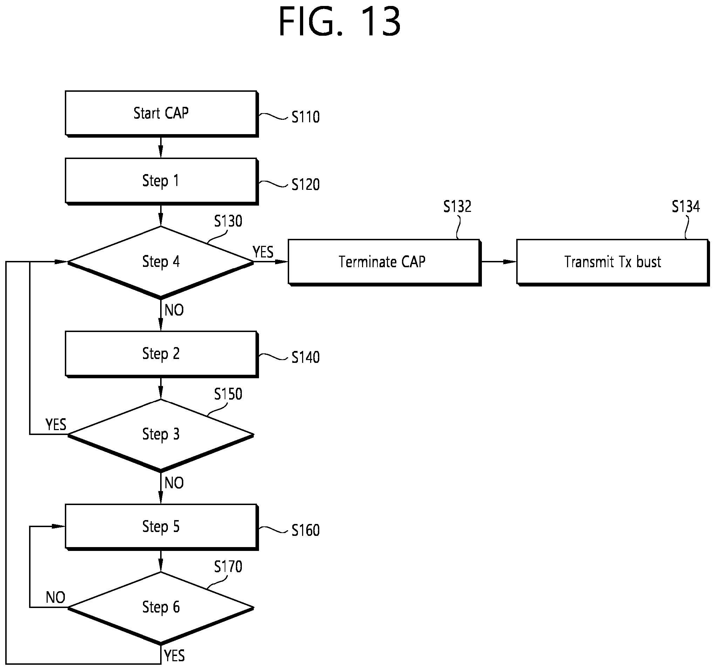

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration Ta. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0(Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration T_{d} (Y), step 4 proceeds. Otherwise (N), step 5 proceeds.

Table 10 shows that mₚ, a minimum contention window (CW), a maximum CW, a maximum channel occupancy time (MCOT), and an allowed CW size, which are applied to the CAP, vary depending on channel access priority classes.

**[Table 10]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 10, a contention window size (CWS), a maximum COT value, etc. for each CAPC may be defined. For example, T_{d} may be equal to Tr+ mₚ * Tₛ₁ (T_{d} = T_{f}+ mₚ * Tₛ₁).

The defer duration T_{d} is configured in the following order: duration T_{f} (16 us) + mₚ consecutive sensing slot durations Tₛ₁ (9 us). T_{f} includes the sensing slot duration Tₛ₁ at the beginning of the 16 us duration.

The following relationship is satisfied: CW_{min,p} <= CWₚ <= CW_{max,p.} CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_d1} = 25 us. Herein, T_{short_d1} includes the duration T_{f}(=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for T_{f} = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

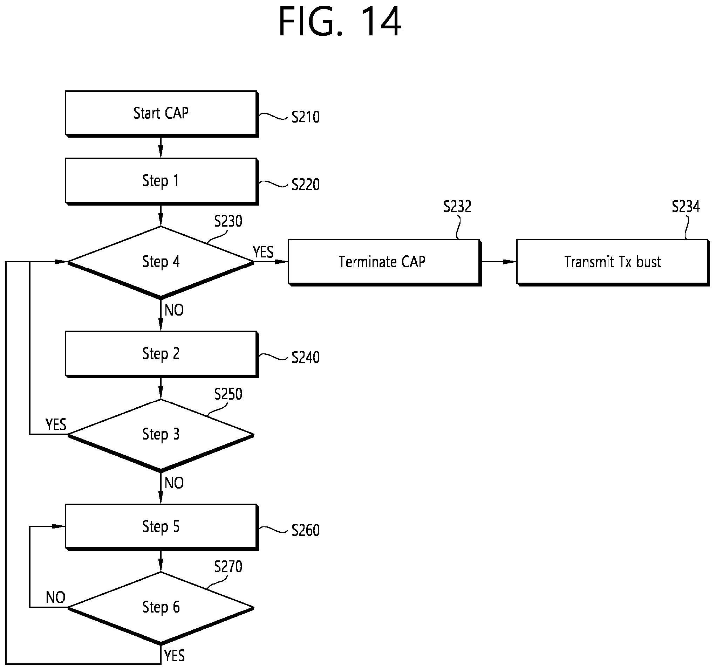

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration T_{d} (Y), step 4 proceeds. Otherwise (N), step 5 proceeds.

Table 11 shows that mₚ, a minimum CW, a maximum CW, a maximum channel occupancy time (MCOT), and an allowed CW size, which are applied to the CAP, vary depending on channel access priority classes.

**[Table 11]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 11, a contention window size (CWS), a maximum COT value, etc. for each CAPC may be defined. For example, T_{d} may be equal to Tr+ mₚ * Tₛ₁ (T_{d} = T_{f}+ mₚ * Tₛ₁).

The defer duration T_{d} is configured in the following order: duration T_{f} (16 us) + mₚ consecutive sensing slot durations Tₛ₁ (9 us). T_{f} includes the sensing slot duration Tₛ₁ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_d1} = 25 us. Herein, T_{short_d1} includes the duration T_{f}(=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, T_{f} includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, mₚ, etc.). For example, the UE may select a backoff counter (BC) after selecting a random value between the minimum CW and the maximum CW mapped to the CAPC. In this case, for example, the BC may be a positive integer less than or equal to the random value. The UE sensing a channel decreases the BC by 1 if the channel is idle. If the BC becomes zero and the UE detects that the channel is idle for the time T_{d} (T_{d} = T_{f} + mₚ * Tₛ₁), the UE may attempt to transmit data by occupying the channel. For example, Tₛ₁ (= 9 usec) is a basic sensing unit or sensing slots, and may include a measurement duration for at least 4 usec. For example, the front 9 usec of T_{f} (= 16 usec) may be configured to be Tₛ₁.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). That is, the operation in which the UE checks whether the channel is idle or busy may be referred to as Clear Channel Assessment (CCA), and the UE may check whether the channel is idle or busy for the CCA duration.

Meanwhile, in a future system, a UE may perform a sidelink transmission and/or reception operation in an unlicensed band. For operations in an unlicensed band, depending on band-specific regulations or requirements, a UE's transmission may be preceded by a channel sensing operation (e.g., energy detection/measurement) for the channel to be used, a UE may perform a transmission in the unlicensed band only if, as a result of the channel sensing, the channel or RB set to be used is determined to be IDLE (e.g., if the measured energy is less than or equal to or greater than a certain threshold value), and, if, according to a result of the channel sensing, the channel or RB set to be used is determined to be BUSY (e.g., if the measured energy is greater than or equal to or greater than a certain threshold value), the UE may cancel all or part of the transmission in the unlicensed band.

Meanwhile, in operation in an unlicensed band, a UE may omit or simplify the channel sensing operation (i.e., make the channel sensing interval relatively small) within a certain time interval after a transmission for a certain time period, or conversely, after a certain time interval after the transmission, the UE may decide whether to transmit or not after performing the usual channel sensing operation.

On the other hand, in a transmission in an unlicensed band, depending on regulations or requirements, the size and/or power spectral density (PSD) of the time interval and/or frequency occupied region of the signal/channel transmitted by the UE may be greater than or equal to a certain level, respectively.

On the other hand, in unlicensed bands, in order to simplify channel sensing, it may be informed through channel occupancy time (COT) interval information that the channel obtained through initial general channel sensing is occupied for a certain period of time, and the length of the COT interval may be configured to have different maximum values depending on the priority of the service or data packet or the channel access priority class (CAPC).

On the one hand, a base station may share a COT duration that it has secured through channel sensing in the form of a DCI transmission, and a UE may perform a specific (indicated) channel sensing type and/or CP extension within the COT duration based on the DCI information received from the base station. On the other hand, a UE may share a COT duration that it has secured through channel sensing to a base station that is the destination of the UE's UL transmission, and the relevant information may be provided through the UL via CG-UCI. In the above situation, the base station may perform simplified channel sensing within the COT duration shared by the UE.

In the case of SL communication, there are situations where a UE is indicated by a base station to use resources for SL transmission through DCI or RRC signaling, such as Mode 1 RA operation, and there are situations where a UE performs SL transmission and reception through sensing operation between UEs without the assistance of a base station, such as Mode 2 RA operation.

On the other hand, for channel access type 1, which can be used regardless of the channel occupancy time (COT) configuration, the procedures shown in Table 12 and Table 13 for DL transmissions and Table 14 and Table 15 for UL transmissions were performed.

In the present disclosure, channel access may be mutually replaceable/substitutable with channel sensing.

**[Table 12]**

| | |
|---|---|
| The eNB/gNB may transmit a transmission after first sensing the channel to be idle during the sensing slot durations of a defer duration *T_{d}* and after the counter N is zero in step 4. The counter N is adjusted by sensing the channel for additional sensing slot duration(s) according to the steps below: | |
| | 1) set *N* = *Nᵢₙᵢₜ*, where *Nᵢₙᵢₜ* is a random number uniformly distributed between 0 and *CWₚ*, and go to step 4; |
| | 2) if *N* > 0 and the eNB/gNB chooses to decrement the counter, set *N* = *N* - 1; |
| | 3) sense the channel for an additional sensing slot duration, and if the additional sensing slot duration is idle, go to step 4; else, go to step 5; |
| | 4) if *N* = 0, stop; else, go to step 2. |
| | 5) sense the channel until either a busy sensing slot is detected within an additional defer duration *T_{d}* or all the sensing slots of the additional defer duration *T_{d}* are detected to be idle; |
| | 6) if the channel is sensed to be idle during all the sensing slot durations of the additional defer duration *T_{d}*, go to step 4; else, go to step 5; |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}*. | |
| The defer duration *T_{d}* consists of duration *T_{f} =* 16us immediately followed by *mₚ* consecutive sensing slot durations *Tₛₗ*, and *T_{f}* includes an idle sensing slot duration *Tₛₗ* at start of *T_{f}.* | |

**[Table 13]**

| | | |
|---|---|---|
| If a gNB transmits transmissions including PDSCH that are associated with channel access priority class p on a channel, the gNB maintains the contention window value *CWₚ* and adjusts *CWₚ* before step 1 of the procedure described in clause 4.1.1 for those transmissions using the following steps: | | |
| | 1) For every priority class *p* ∈ {1,2,3,4}, set *CWₚ = CW_{min,p}.* | |
| | 2) If HARQ-ACK feedback is available after the last update of *Wₚ* , go to step 3. Otherwise, if the gNB transmission after procedure described in clause 4.1.1 does not include a retransmission or is transmitted within a duration *T_{w}* from the end of the *reference duration* corresponding to the earliest DL channel occupancy after the last update of *CWₚ*, go to step 5; otherwise go to step 4. | |
| | 3) The HARQ-ACK feedback(s) corresponding to PDSCH(s) in the reference duration for the latest DL channel occupancy for which HARQ-ACK feedback is available is used as follows: | |
| | | a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
| | 4) Increase *CWₚ* for every priority class *p* ∈ {1,2,3,4} to the next higher allowed value. | |
| | 5) For every priority class p ∈ {1,2,3,4}, maintain *CWₚ* as it is; go to step 2. | |
| The *reference duration* and duration *T_{w}* in the procedure above are defined as follows: | | |
| | - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. | |
| | - *T_{W}* = *max*(*T_{A},T_{B} +* 1ms) where *T_{B}* is the duration of the transmission burst from start of the *reference duration* in ms and *T_{A}* = 5ms if the absence of any other technology sharing the channel can not be guaranteed on a long-term basis (e.g. by level of regulation), and *T_{A}* = 10ms otherwise. | |
| If a gNB transmits transmissions using Type 1 channel access procedures associated with the channel access priority class *p* on a channel and the transmissions are not associated with explicit HARQ-ACK feedbacks by the corresponding UE(s), the gNB adjusts *CWₚ* before step 1 in the procedures described in subclase 4.1.1, using the latest *CWₚ* used for any DL transmissions on the channel using Type 1 channel access procedures associated with the channel access priority class *p.* If the corresponding channel access priority class *p* has not been used for any DL transmissions on the channel, *CWₚ = CW_{min,p}* is used. | | |

**[Table 14]**

| | |
|---|---|
| A UE may transmit the transmission using Type 1 channel access procedure after first sensing the channel to be idle during the slot durations of a defer duration *T_{d}*, and after the counter N is zero in step 4. The counter N is adjusted by sensing the channel for additional slot duration(s) according to the steps described below. | |
| | 1) set *N* = *Nᵢₙᵢₜ,* where *Nᵢₙᵢₜ* is a random number uniformly distributed between 0 and *CWₚ*, and go to step 4; |
| | 2) if *N* > 0 and the UE chooses to decrement the counter, set *N* = *N* - 1; |
| | 3) sense the channel for an additional slot duration, and if the additional slot duration is idle, go to step 4; else, go to step 5; |
| | 4) *if N* = 0, stop; else, go to step 2. |
| | 5) sense the channel until either a busy slot is detected within an additional defer duration *T_{d}* or all the slots of the additional defer duration *T_{d}* are detected to be idle; |
| | 6) if the channel is sensed to be idle during all the slot durations of the additional defer duration *T_{d}*, go to step 4; else, go to step 5; |
| If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*. | |
| The defer duration *T_{d}* consists of duration *T_{f} =* 16us immediately followed by *mₚ* consecutive slot durations where each slot duration is *Tₛₗ* = 9us, and *T_{f}* includes an idle slot duration *Tₛₗ* at start of *T_{f}.* | |

**[Table 15]**

| | | |
|---|---|---|
| If a UE transmits transmissions using Type 1 channel access procedures that are associated with channel access priority class *p* on a channel, the UE maintains the contention window value *CWₚ* and adjusts *CWₚ* for those transmissions before step 1 of the procedure described in clause 4.2.1.1, using the following steps: | | |
| | 1) For every priority class *p* ∈ {1,2,3,4}, set *CWₚ = CW_{min,p}*; | |
| | 2) If HARQ-ACK feedback is available after the last update of *CWₚ*, go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ*, go to step 5; otherwise go to step 4. | |
| | 3) The HARQ-ACK feedback(s) corresponding to PUSCH(s) in the *reference duration* for the latest UL channel occupancy for which HARQ-ACK feedback is available is used as follows: | |
| | | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| | 4) Increase *CWₚ* for every priority class *p* ∈ {1,2,3,4} to the next higher allowed value; | |
| | 5) For every priority class *p* ∈ {1,2,3,4}, maintain *CWₚ* as it is; go to step 2. | |
| The HARQ-ACK feedback, *reference duration* and duration *T_{w}* in the procedure above are defined as the following: | | |
| | - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: | |
| | | - If a new transmission is indicated, 'ACK' is assumed for the transport blocks or code block groups in the corresponding PUSCH(s) for the TB-based and CBG-based transmission, respectively. |
| | | - If a retransmission is indicated for TB-based transmissions, 'NACK' is assumed for the transport blocks in the corresponding PUSCH(s). |
| | | - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| | - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. | |
| | - *T_{W}* = *max*(*T_{A},T_{B} +* 1ms) where *T_{B}* is the duration of the transmission burst from start of the *reference duration* in ms and *T_{A}* = 5ms if the absence of any other technology sharing the channel cannot be guaranteed on a long-term basis (e.g. by level of regulation), and *T_{A}* = 10ms otherwise. | |

On the other hand, within the channel occupancy time (COT), the simplified channel access type 2 can be used before transmission, and the procedure as shown in Table 16 for DL transmission and Table 17 for UL transmission is performed.

**[Table 16]**

| | |
|---|---|
| 4.1.2 Type 2 DL channel access procedures | |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause | |
| 4.1.2.1. Type 2A channel access procedures as described in clause 4.1.2.1 are only applicable to the following transmission(s) performed by an eNB/gNB: | |
| | - Transmission(s) initiated by an eNB including discovery burst and not including PDSCH where the transmission(s) duration is at most 1*ms*, or |
| | - Transmission(s) initiated by a gNB with only discovery burst or with discovery burst multiplexed with non-unicast information, where the transmission(s) duration is at most 1*ms*, and the discovery burst duty cycle is at most 1/20, or |
| | - Transmission(s) by an eNB/ gNB following transmission(s) by a UE after a gap of 25us in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3. | |
| 4.1.2.1 Type 2A DL channel access procedures | |
| An eNB/gNB may transmit a DL transmission immediately after sensing the channel to be idle for at least a sensing interval *T_{short_dl}* = 25*us. T_{short_dl}* consists of a duration *T_{f} =* 16us immediately followed by one sensing slot and *T_{f}* includes a sensing slot at start of *T_{f}.* The channel is considered to be idle for *T_{short_dl}* if both sensing slots of *T_{short_dl}* are sensed to be idle. | |
| 4.1.2.2 Type 2B DL channel access procedures | |
| A gNB may transmit a DL transmission immediately after sensing the channel to be idle within a duration of *T_{f} = 16us. T_{f}* includes a sensing slot that occurs within the last 9*us* of *T_{f}.* The channel is considered to be idle within the duration *T_{f}* if the channel is sensed to be idle for a total of at least 5*us* with at least 4us of sensing occurring in the sensing slot. | |
| 4.1.2.3 Type 2C DL channel access procedures | |
| When a gNB follows the procedures in this clause for transmission of a DL transmission, the gNB does not sense the channel before transmission of the DL transmission. The duration of the corresponding DL transmission is at most 584us. | |

**[Table 17]**

| |
|---|
| 4.2.1.2 Type 2 UL channel access procedure |
| This clause describes channel access procedures by UE where the time duration spanned by the sensing slots that are sensed to be idle before a UL transmission(s) is deterministic. |
| If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25us. *T*_{short_ul} consists of a duration *T_{f} =* 16usimmediately followed by one sensing slot and *T_{f}*includes a sensing slot at start of *T_{f}.* The channel is considered to be idle for T_{short_ul} if both sensing slots of T_{short_ul}.are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of *T_{f} = 16us. T_{f}* includes a sensing slot that occurs within the last 9*us* of *T_{f}.* The channel is considered to be idle within the duration *T_{f}* if the channel is sensed to be idle for total of at least 5*us* with at least 4us of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584us. |

According to one embodiment of the present disclosure, a type 2A SL channel access may be in the same manner as a type 2A DL and/or UL channel access, with a sensing interval of T_short_sl=25us and a T_f=16us interval immediately following the sensing interval comprised of one sensing slot, where T_f comprises a sensing slot at the beginning. As for the basic idle determination, the scheme of DL or UL may also be used.

According to one embodiment of the present disclosure, a Type 2B SL channel access may be in the same manner as a Type 2B DL and/or UL channel access, with a sensing interval of T_f =16us, where T_f includes a sensing slot at the end of the 9us interval. As for the basic idle determination, the DL or UL scheme may also be used.

According to one embodiment of the present disclosure, a Type 2C SL channel access may be in the same manner as a Type 2C DL and/or UL channel access, such that no channel sensing is performed. Instead, the time interval of the SL transmission may be up to 584us.

According to one embodiment of the present disclosure, a type 1 SL channel access is performed in the same manner as a type 1 DL and/or UL channel access, wherein: i) a random integer value N is derived based on a contention window size corresponding to the priority class, ii) if the channel sensing result for a defer duration of size T_d corresponding to the priority class is an idle, the counter value is decremented to N-1 with T_sl as the unit when it is idle; and iii) if the counter value is zero, the UE may occupy the RB set or channel subject to channel sensing.

However, if some of the channel sensing results for the above T_sl interval are determined to be idle, the counter value may be maintained and channel sensing may be continued until the channel sensing results in the unit of the defer duration of size T_d again become idle. In the above, the defer duration of length T_d may be in the form of m_p consecutive T_sl after T_f=16us, where m_p is a value determined according to the priority class p, and may be a time interval in which channel sensing is performed with T_sl=9us.

According to one embodiment of the present disclosure, when a UE has occupied a channel via a Type 1 SL channel access and the UE is not ready to transmit a sidelink transmission, the UE may configure a defer duration of length T_d and a sensing interval of length T_sl immediately preceding the ready-to-transmit sidelink transmission, and if both are idle, the UE may immediately perform the sidelink transmission. Here, if any of them are busy, the UE may perform the type 1 SL channel access again.

For example, if a sidelink transmission is difficult at the end of the channel sensing (e.g., if the end of the channel sensing is after the start of the sidelink transmission), the UE may reselect the sidelink transmission resource. For example, the reselected resource may be selected in consideration of the end time of the channel sensing and/or the length of the remaining sensing interval. For example, the remaining sensing interval may be a value derived by assuming that the channel sensing is all idle.

In the present disclosure, for example, unlicensed spectrum may be interchangeable/substitutable with shared spectrum.

Meanwhile, in the present disclosure, a transmitting UE (i.e., TX UE) may be a UE which transmits data to (target) receiving UE(s) (i.e., RX UE(s)). For example, the TX UE may be a UE which performs PSCCH transmission and/or PSSCH transmission. For example, the TX UE may be a UE which transmits SL CSI-RS(s) and/or a SL CSI report request indication to (target) RX UE(s). For example, the TX UE may be a UE which transmits a (pre-defined) reference signal(s) (e.g., PSSCH demodulation reference signal (DM-RS)) and/or SL (L1) RSRP report request indicator, which is/are used for SL (L1) RSRP measurement, to (target) to RX UE(s). For example, the TX UE may be a UE which transmits a (control) channel (e.g., PSCCH, PSSCH, etc.) and/or reference signal(s) (e.g., DM-RS(s), CSI-RS(s), etc.) through the (control) channel, which is/are used for SL radio link monitoring (RLM) operation(s) and/or SL radio link failure (RLF) operation(s) of (target) RX UE(s).

Meanwhile, in the present disclosure, a receiving UE (i.e., RX UE) may be a UE which transmits SL HARQ feedback to transmitting UE(s) (i.e., TX UE(s)), based on whether or not data transmitted by TX UE(s) is decoded successfully and/or whether or not a PSCCH (related to PSSCH scheduling) transmitted by TX UE(s) is detected/decoded successfully. For example, the RX UE may be a UE which performs SL CSI transmission to TX UE(s) based on SL CSI-RS(s) and/or a SL CSI report request indication received from TX UE(s). For example, the RX UE may be a UE which transmits, to TX UE(s), an SL (L1) RSRP measurement value measured based on (pre-defined) reference signal(s) and/or SL (L1) RSRP report request indication received from TX UE(s). For example, the RX UE may be a UE which transmits its own data to TX UE(s). For example, the RX UE may be a UE which performs SL RLM operation(s) and/or SL RLF operation(s) based on a (pre-configured) (control) channel and/or reference signal(s) through the (control) channel received from TX UE(s).

According to one embodiment of the present disclosure, when a receiving UE transmits SL HARQ feedback information for a PSSCH (and/or PSCCH) received from a transmitting UE, (part of) the below schemes may be considered. For example, the (part of) the corresponding schemes may be limitedly applied only if the receiving UE has successfully decoded/detected the PSCCH scheduling the PSSCH.
- option 1) transmitting NACK information only if a PSSCH decoding/reception is failed
- option 2) transmitting ACK information when a PSSCH decoding/reception is succeeded, transmitting NACK information when failed

Meanwhile, in the present disclosure, a TX UE may transmit the entirety or part of information described below to RX UE(s) through SCI(s). Herein, for example, the TX UE may transmit the entirety or part of the information described below to the RX UE(s) through a first SCI and/or a second SCI.
- PSSCH (and/or PSCCH) related resource allocation information (e.g., the number/positions of time/frequency resources, resource reservation information (e.g., period))
- SL CSI report request indicator or SL (L1) RSRP (and/or SL (L1) RSRQ and/or SL (L1) RSSI) report request indicator
- SL CSI transmission indicator (or SL (L1) RSRP (and/or SL (L1) RSRQ and/or SL (L1) RSSI) information transmission indicator)) (on a PSSCH)
- Modulation and coding scheme (MCS) information
- Transmit power information
- L1 destination ID information and/or L1 source ID information
- SL HARQ process ID information
- New data indicator (NDI) information
- Redundancy version (RV) information
- (Transmission traffic/packet related) QoS information (e.g., priority information)
- SL CSI-RS transmission indicator or information on the number of (to-be-transmitted) SL CSI-RS antenna ports
- Location information of the TX UE or location (or distance region) information of target RX UE(s) (for which SL HARQ feedback is requested)
- Reference signal (e.g., DM-RS, etc.) information related to channel estimation and/or decoding of data to be transmitted through a PSSCH. For example, the reference signal information may be information related to a pattern of a (time-frequency) mapping resource of DM-RS, rank information, antenna port index information, information on the number of antenna ports, etc.

Meanwhile, in the present disclosure, for example, a PSCCH may be replaced/substituted with at least one of a SCI, a first SCI (1^{st}-stage SCI), and/or a second SCI (2^{nd}-stage SCI), or vice versa. For example, a SCI may be replaced/substituted with at least one of a PSCCH, a first SCI, and/or a second SCI, or vice versa. For example, a PSSCH may be replaced/substituted with a second SCI and/or a PSCCH, or vice versa.

Meanwhile, in the present disclosure, for example, if SCI configuration fields are divided into two groups in consideration of a (relatively) high SCI payload size, an SCI including a first SCI configuration field group may be referred to as a first SCI or a 1^{st} SCI, and an SCI including a second SCI configuration field group may be referred to as a second SCI or a 2^{nd} SCI. For example, the 1^{st} SCI and the 2^{nd} SCI may be transmitted through different channels. For example, the transmitting UE may transmit the first SCI to the receiving UE through the PSCCH. For example, the second SCI may be transmitted to the receiving UE through an (independent) PSCCH, or may be transmitted in a piggyback manner together with data through the PSSCH.

Meanwhile, in the present disclosure, for example, "configuration" or "definition" may mean (pre-)configuration from base station(s) or network(s). For example, "configuration" or "definition" may mean resource pool specific (pre-)configuration from base station(s) or network(s). For example, base station(s) or network(s) may transmit information related to "configuration" or "definition" to UE(s). For example, base station(s) or network(s) may transmit information related to "configuration" or "definition" to UE(s) through pre-defined signaling. For example, the pre-defined signaling may include at least one of RRC signaling, MAC signaling, PHY signaling, and/or SIB.

Meanwhile, in the present disclosure, for example, "configuration" or "definition" may mean that it is designated or configured through pre-configured signaling between UEs. For example, information related to "configuration" or "definition" may be transmitted or received pre-configured signaling between UEs. For example, the pre-defined signaling may include at least one of RRC signaling, MAC signaling, PHY signaling, and/or SIB.

Meanwhile, in the present disclosure, for example, RLF may be replaced/substituted with out-of-synch (OOS) and/or in-synch (IS), or vice versa.

Meanwhile, in the present disclosure, for example, a resource block (RB) may be replaced/substituted with a subcarrier, or vice versa. For example, a packet or a traffic may be replaced/substituted with a transport block (TB) or a medium access control protocol data unit (MAC PDU) according to a transmission layer, or vice versa. For example, a code block group (CBG) may be replaced/substituted with a TB, or vice versa. For example, a source ID may be replaced/substituted with a destination ID, or vice versa. For example, an L1 ID may be replaced/substituted with an L2 ID, or vice versa. For example, the L1 ID may be an L1 source ID or an L1 destination ID. For example, the L2 ID may be an L2 source ID or an L2 destination ID.

Meanwhile, in the present disclosure, for example, operation(s) of a TX UE to reserve/select/determine retransmission resource(s) may include operation(s) of the TX UE to reserve/select/determine potential retransmission resource(s) in which actual use is determined based on SL HARQ feedback information received from RX UE(s).

Meanwhile, in the present disclosure, a sub-selection window may be replaced/substituted with a selection window and/or a pre-configured number of resource sets within the selection window, or vice versa.

Meanwhile, in the present disclosure, SL MODE 1 may refer to a resource allocation method or a communication method in which a base station directly schedules SL transmission resource(s) for a TX UE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a UE performing SL communication based on SL MODE 1 may be referred to as a MODE 1 UE or MODE 1 TX UE, and a UE performing SL communication based on SL MODE 2 may be referred to as a MODE 2 UE or MODE 2 TX UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant. For example, in the CG type 1, a base station may allocate periodic resource(s) to a TX UE through an RRC message. For example, in the CG type 2, a base station may allocate periodic resource(s) to a TX UE through an RRC message, and the base station may dynamically activate or deactivate the periodic resource(s) through a DCI.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. For example, cast may be replaced/substituted with at least one of unicast, groupcast, and/or broadcast, or vice versa. For example, a cast type may be replaced/substituted with at least one of unicast, groupcast, and/or broadcast, or vice versa. For example, the cast or the cast type may include unicast, groupcast and/or broadcast.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), a QoS profile, a QoS parameter, and/or requirement, or vice versa.

Meanwhile, in the present disclosure, for example, for convenience of description, a (physical) channel used when a RX UE transmits at least one of the following information to a TX UE may be referred to as a PSFCH.
- SL HARQ feedback, SL CSI, SL (L1) RSRP

Meanwhile, when performing sidelink communication, a method for a transmitting UE to reserve or pre-determine transmission resource(s) for receiving UE(s) may be representatively as follows.

For example, the transmitting UE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving UE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

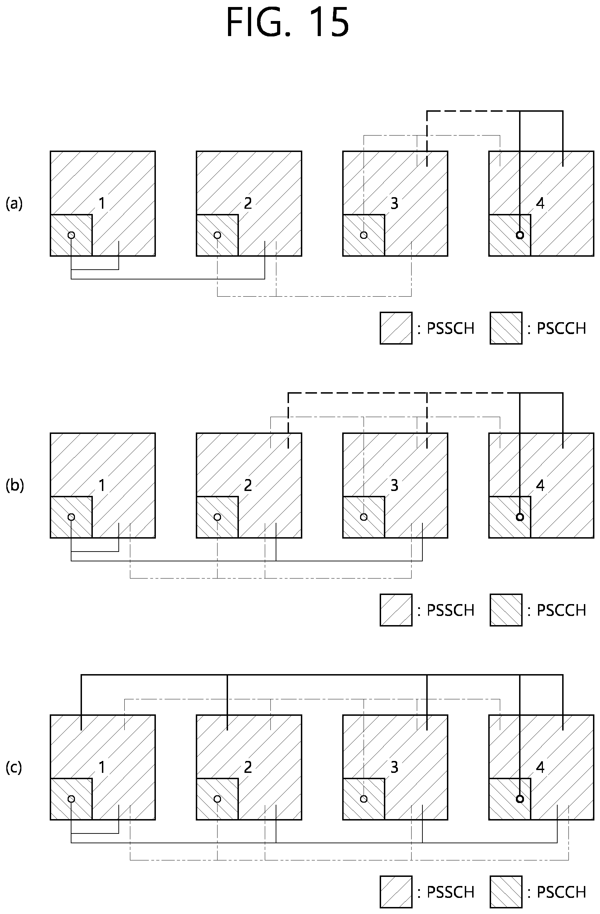

FIG. 15 shows a method in which a UE that has reserved transmission resource(s) informs another UE of the transmission resource(s), according to an embodiment of the present disclosure. The embodiment of FIG. 15 may be combined with various embodiments of the present disclosure.

Specifically, for example, (a) of FIG. 15 shows a method for performing by a transmitting UE chain-based resource reservation by transmitting/signaling location information of (maximum) 2 transmission resources to receiving UE(s) through one SCI, in the case of a value of K = 4. For example, (b) of FIG. 15 shows a method for performing by a transmitting UE chain-based resource reservation by transmitting/signaling location information of (maximum) 3 transmission resources to receiving UE(s) through one SCI, in the case of a value of K = 4. For example, referring to (a) and (b) of FIG. 15, the transmitting UE may transmit/signal only location information of the fourth transmission-related resource to the receiving UE(s) through the fourth (or last) transmission-related PSCCH. For example, referring to (a) of FIG. 15, the transmitting UE may transmit/signal to the receiving UE(s) not only location information of the fourth transmission-related resource but also location information of the third transmission-related resource additionally through the fourth (or last) transmission-related PSCCH. For example, referring to (b) of FIG. 15, the transmitting UE may transmit/signal to the receiving UE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 15, if the transmitting UE may transmit/signal to the receiving UE(s) only location information of the fourth transmission-related resource through the fourth (or last) transmission-related PSCCH, the transmitting UE may set or designate a field/bit of location information of unused or remaining transmission resource(s) to a pre-configured value (e.g., 0). For example, in (a) and (b) of FIG. 15, if the transmitting UE may transmit/signal to the receiving UE(s) only location information of the fourth transmission-related resource through the fourth (or last) transmission-related PSCCH, the transmitting UE may be set or designate a field/bit of location information of unused or remaining transmission resource(s) to a pre-configured status/bit value indicating/representing the last transmission (among 4 transmissions).

Meanwhile, for example, the transmitting UE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting UE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 15 shows a method for performing by the transmitting UE block-based resource reservation, by signaling location information of 4 transmission resources to receiving UE(s) through one SCI, in the case of a value of K = 4.

According to one embodiment of the present disclosure, (some or all of) the following rules may be configured to be applied to signaling related to a COT sharing operation between UEs in an unlicensed band. Here, for example, any (some or all) of the rules below may be applied only and restrictively when an inter UE coordination (IUC) operation (e.g., operation in which (non-preferred) resource set information (and/or resource conflict indicators) is exchanged between UEs) is not configured (enabled) (together) (on a resource pool and/or from a UE perspective). Further, for example, (some or all) of the rules of this disclosure may be extended to COT sharing operations between base stations and UEs.

For example, via first SCI and/or second SCI, whether the target receiver (e.g., the receiving UE) for the COT sharing includes a receiver for PSCCH/PSSCH data transmitted by the UE providing the COT sharing information and/or whether the target receiver for the COT sharing includes a UE indicated in the COT sharing information or a UE determined based on ID information (e.g., (L1 or L2) source ID and/or (L1 or L2) destination ID) may be indicated.

For example, it may be indicated whether the container used to transmit information for COT sharing is first SCI, second SCI, MAC CE, and/or PC5-RRC signaling through first SCI and/or second SCI. For example, whether there is a MAC CE that includes information for COT sharing may be indicated through first SCI and/or second SCI. For example, if it is indicated above through SCI that the COT sharing information is transmitted in the MAC CE and/or PC5-RRC signaling, a UE that is not a receiver of the PSCCH/PSSCH data including the COT sharing information may perform the PSSCH decoding. For example, a UE that performs PSSCH decoding among the UEs that are not data receivers may be a UE that is selected by (some) ID information (e.g., (some) (L1 or L2) source ID and/or (some) (L1 or L2) destination ID) provided as COT sharing information in first SCI and/or second SCI. For example, the (some) ID information may include an additional ID.

For example, the information for the COT sharing included in first SCI and/or second SCI may include at least one of (the maximum) CAPC value information used at COT initiation or available for COT sharing, remaining COT duration information, COT start offset, RB set information for the COT, and/or a full or remaining information of a COT shareable (destination) ID (e.g., an (L1 and/or L2) source ID and/or an (L1 or L2) destination ID). For example, the information may be included and transmitted in respective fields included in first SCI and/or second SCI.

For example, the information for COT sharing may include a state indicating NO COT sharing, or a combination of the above information values. For example, first SCI may include a field indicating whether the transmission related to the first SCI includes information related to COT sharing. For example, the field indicating whether the transmission related to the first SCI includes information related to COT sharing may be included in the first SCI based on the first SCI being transmitted in a shared spectrum. That is, the field indicating whether the transmission related to the first SCI includes information related to COT sharing may not be included in the first SCI if the first SCI is transmitted in a licensed band.

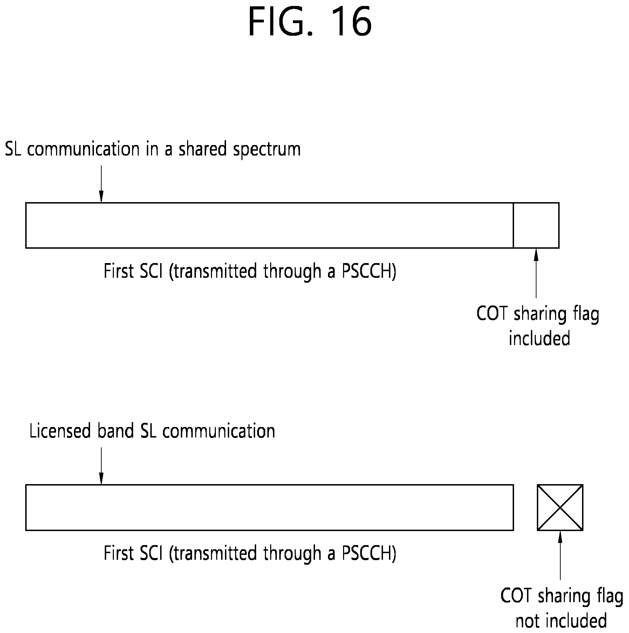

FIG. 16 shows a structure of first SCI whose fields it includes are different according to the spectrum in which SL communication is performed, according to one embodiment of the present disclosure. The embodiment of FIG. 16 may be combined with various embodiments of the present disclosure.

Referring to FIG. 16, first SCI is shown whose structure is different according to the spectrum in which SL communication is performed. For example, the first SCI may refer to a first stage SCI or SCI format 1-A. For example, the first SCI may be transmitted via PSCCH.

For example, if SL communication is performed in shared spectrum (or, in an unlicensed band), first SCI may include a COT sharing flag field. For example, the COT sharing flag field may be a field that may include information related to whether second SCI related to the PSCCH in which the first SCI is transmitted includes COT sharing information.

Conversely, for example, if SL communication is performed in a licensed band, first SCI may not include a COT sharing flag field. As in this embodiment, by causing whether a field included in SCI is included or not to be conditionally determined, the effect of allowing the necessary information to be delivered within the limited payload of SCI may occur.

For example, in a MAC CE and/or PC5-RRC signal, information for COT sharing may include at least one of all or remaining information of a COT shareable (destination) ID (e.g., (L1 or L2) source ID and/or (L1 or L2) destination ID), a (L1 or L2) source ID and/or a (L1 or L2) destination ID for a transmission of a UE when COT sharing, and/or COT resource information (e.g., at least one of COT shareable (maximum) CAPC value information, the remaining COT duration information, a COT start offset and/or RB set information for a COT) per COT shareable UE or ID (e.g., (L1 or L2) source ID and/or (L1 or L2) destination ID).

For example, if COT sharing information is transmitted via first SCI and/or second SCI, the at least one RB set used for transmission of PSCCH and/or PSSCH in which the first SCI and/or the second SCI is included may be the same as the at least one RB set used for transmission of PSCCH/PSSCH including COT sharing information. In other words, a PSCCH/PSSCH transmission performed by a UE that has received the COT sharing information based on the COT sharing information may be performed based on the same RB set as the RB set used to deliver the COT sharing information.

For example, a UE may be configured to not expect IUC information and COT sharing information to be transmitted simultaneously over the same SCI, i.e., for example, IUC information and COT sharing information may not coexist within one SCI.

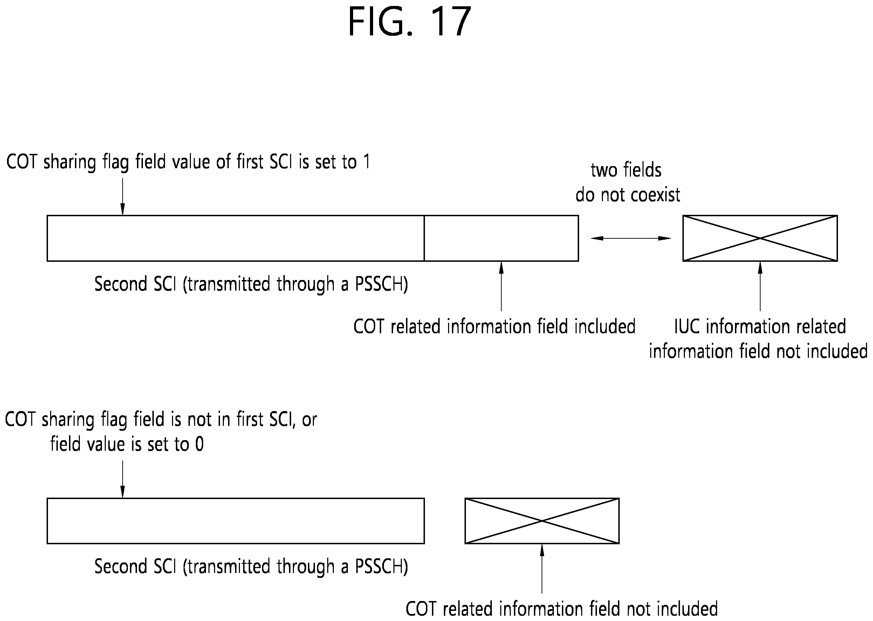

FIG. 17 shows a structure of second SCI whose included field is different according to the value set in the COT sharing flag field of first SCI, according to one embodiment of the present disclosure. The embodiment of FIG. 17 may be combined with various embodiments of the present disclosure.

Referring to FIG. 17, a structure of second SCI whose included field is different based on the COT sharing flag field of first SCI is shown. For example, the second SCI may be a second stage SCI (2^{nd} stage SCI) or any one of SCI formats 2-A, 2-B, 2-C, or 2-D. For example, the second SCI may be transmitted via PSSCH.

For example, second SCI transmitted via PSSCH may include a COT related information field if the first SCI transmitted via PSCCH related to the PSSCH includes a COT sharing flag field and the value of the field is set to 1. For example, the COT related information field may include at least one of a CAPC field (e.g., 2 bits) related to the generation of the COT, a COT sharing cast type field (e.g., 2 bits), a COT sharing additional ID field (e.g., 24 bits), and/or a remaining COT duration field (e.g., FLOOR(log₂(10*2^{u})) bits). Here, if the COT related information field is included on the second SCI as described above, the second SCI may not be able to include an IUC information related field, i.e., the IUC information related field and the COT related information field may not coexist on second SCI.

Conversely, for example, the second SCI transmitted via PSSCH may not include the COT related information field if the first SCI transmitted via PSCCH related to the PSSCH does not include the COT sharing flag field, or if it does, its value is set to zero. By conditionally causing whether a field is included in SCI to be determined, as in this embodiment, the effect of allowing the necessary information to be delivered within the limited payload of SCI may occur.

According to one embodiment of the present disclosure, if a PSCCH in which a first SCI is transmitted and a PSSCH in which a second SCI is transmitted are transmitted from a transmitting UE to a receiving UE based on at least one RB set, the PSCCH/PSSCH transmission that the receiving UE performs based on the COT related information included in the second SCI may be the same as the at least one RB set. In other words, according to this embodiment, by using the RB set in which the COT related information is transmitted itself as information for the RB set related to the COT, the information transmitted via the SCI can be reduced, thereby having the effect of reducing the limited SCI payload.

For example, whether or not the above rules are applied (and/or the values of the parameters related to the proposed schemes/rules of this disclosure) may be configured/enabled (and/or the application of the above rules may be configured/enabled limitedly) specifically (or, differently, or, independently), for at least one among elements/parameters of (or per), a service type (and/or a (LCH or service) priority and/or a QOS requirement (e.g., latency, reliability, minimum communication range) and/or a PQI parameter) (and/or a HARQ enabled (and/or disabled) LCH/MAC PDU (transmission) and/or a CBR measurement value of a resource pool and/or SL cast type (e.g., unicast, groupcast, broadcast) and/or an SL groupcast HARQ feedback option (e.g., a NACK only feedback, an ACK/NACK feedback, a TX-RX distance based NACK only feedback) and/or an SL MODE 1 CG type (e.g., SL CG type 1/2) and/or an SL mode type (e.g., mode 1/2) and/or a resource pool and/or whether it is a resource pool in which a PSFCH resource is configured and/or a case in which a periodic resource reservation operation (and/or an aperiodic resource reservation operation) is enabled/configured (or not enabled/configured) on a resource pool and/or a case in which a partial sensing operation (and/or a random resource selection operation (and/or a full sensing operation)) is enabled/configured (or not enabled/configured) on a resource pool and/or a source (L2) ID (and/or destination (L2) ID) and/or a PC5 RRC connection link and/or an SL link and/or a connection state (with a base station) (e.g., RRC CONNECTED state, IDLE state, INACTIVE state) and/or an SL HARQ process (ID) and/or whether it is an SL DRX operation is performed (of a transmitting UE or a receiving UE) and/or whether it is a power saving (transmitting or receiving) UE and/or a case where a PSFCH TX and a PSFCH RX (and/or a plurality of PSFCH transmissions (whose UE capability is exceeded)) overlaps (and/or a case where a PSFCH transmission (and/or a PSFCH reception) is omitted) (in the perspective of a specific UE) and/or a case where a receiving UE (successively) actually received from a transmitting UE a PSCCH (and/or PSSCH) (retransmission and/or a case where a (transmitting) UE performing a packet transmission (and/or transmission resource (re)selection) performs a power saving operation (and/or an SL DRX operation) and/or a case where a target (receiving) UE of a transmission packet performs a power saving operation (and/or an SL DRX operation) and/or a case where a remaining PDB value related to a transmission packet is greater than equal to a pre-configured threshold value (or less than or equal to) and/or a case of an initial transmission (and/or a retransmission) (related to a TB) and/or a case where an interlace based structure (RB) is applied and/or a case where (pre-configured) channel access type (e.g., type 1, type 2A, type 2B, type 2C, semi-static channel occupancy) is performed and/or a case where a transmission/reception of an (pre-configured) SL channel/signal (e.g., SL SSB, PSCCH, PSSCH, PSFCH) is performed and/or an RB set (and/or a channel and/or a carrier) (for which a channel access operation is performed in an unlicensed band) and/or COT(channel occupancy time) and/or a TX burst and/or a discovery burst), etc. In addition, a combination of the proposed schemes (and/or proposed rules and/or embodiments) described in this disclosure may be applied.

Furthermore, the word "configuration" (or "designation") in this disclosure may be broadly interpreted to a form of informing a UE through a predefined (physical layer or higher layer) channel/signal (e.g., SIB, RRC, MAC CE) (and/or, a form being supporting through a pre-configuration, and/or, a form of informing another UE through a predefined (physical layer or higher layer) channel/signal (e.g., SL MAC CE, PC5 RRC)), etc.

In addition, the "PSFCH" wording in this disclosure may be (inter) expanded interpreted as "(NR or LTE) PSSCH (and/or (NR or LTE) PSCCH) (and/or (NR or LTE) SL SSB (and/or UL channel/signal))".

Further, the proposed schemes in this disclosure may be combined with each other and extended (into new forms of schemes) to be used. Furthermore, in this disclosure, the wording "active time" (and/or "on-duration") wording in this disclosure may be (inter) expanded interpreted as "on-duration" (and/or "active time").

According to one embodiment of the present disclosure, the scheme for determining a contention window size may be a scheme where a plurality of schemes are mixed and matched. For example, the scheme may be a scheme that, when there are multiple SL HARQ-ACK feedback groups referenced, the result determined based on a representative HARQ-ACK value of each group maintains the CWₚ value for all or each CAPC and/or a scheme that increases the CWₚ value for all or each CAPC to the next allowable value if the result is not to initialize to the initial value.

For example, if there are multiple factors referenced in configuring the contention window size, and if a result that increases the CWₚ value to the next allowable value and maintaining or initializing the CWₚ value occur simultaneously as a result of the determination of each factor, the CWₚ value may be maintained and/or the CWₚ value may be initialized to a minimum value.

For example, if there are multiple factors that are referenced in configuring the contention window size, and if a result that increases the CWₚ value to the next allowable value and maintaining or initializing the CWₚ value occur simultaneously as a result of the determination of each factor, the CWₚ value may be increased to the next allowable value.

According to one embodiment of the present disclosure, the PSCCH/PSSCH referenced to determine the contention window size may be received within a specific time interval. For example, the specific time interval may exist within the earliest SL channel occupancy interval after the UE last updated its CWₚ.

According to one embodiment of the present disclosure, an operation in which CWₚ is initialized to a minimum value may be replaced by another specific value (e.g., a (pre-)configured value), and/or the specific value may be configured differently according to factors that control the size of the contention window.

In various embodiments of the present disclosure, for example, The reference duration may be an interval i) from the start of channel occupancy for a COT occupied by a UE (for sidelink communication) and/or a COT occupied by a base station (for sidelink communication) to the end of the first slot in which an actual specific sidelink transmission is performed for all allocated resources for sidelink transmission, or ii) to the end of the first transmission burst including an actual specific sidelink transmission for all allocated resources for sidelink transmission, or iii) to an earlier time point between the above end points. For example, the specific sidelink transmission may be a PSCCH/PSSCH transmission for unicast and/or groupcast and/or PSCCH/PSSCH with SL HARQ-ACK feedback enabled. For example, the length of the reference interval may be (pre-)configured per resource pool and/or per SL priority value of the SL transmission of a UE when the COT is initialized.

In various embodiments of the present disclosure, different combinations of the above may be used, for example, according to whether the COT duration is initialized by a UE or a base station.

In various embodiments of the present disclosure, for example, adjusting the size of the contention window for sidelink may be performed per unicast session (group) and/or per cast type and/or per transmission priority value and/or per SL transmission with SL HARQ-ACK feedback enabled/disabled and/or per SL HARQ-ACK feedback option, respectively. For example, the processes of adjusting the size of the contention window may be performed for each case of a first UE transmitting an SL to a second UE and transmitting an SL to a third UE, respectively . For example, when adjusting the size of the contention window based on HARQ-ACK, the HARQ-ACK may be limited to a specific cast type and/or a specific unicast session.

In various embodiments of the present disclosure, for example, adjusting the size of the contention window for sidelink may be performed only based on a specific cast type (e.g., unicast or group cast) and/or PSSCH with SL HARQ-ACK feedback enabled.

In various embodiments of the present disclosure, for example, initializing the value of CW_p to the respective minimum value may be applied by replacing it with decreasing the value of CW_p to the previous allowable value.

For example, when accessing a TYPE 1 SL channel, the size of the contention window may be (pre-)configured per priority class and/or per SL priority and/or per resource pool. For example, in any of the above cases, an operation to separately adjust the size of the contention window may not be performed by the UE.

In various embodiments of the present disclosure, for example, in a channel sensing operation according to a channel access type, a threshold value for determining whether a channel is busy or idle may be (pre-)configured, and/or predefined per resource pool, and/or per SL BWP, and/or per an RB set, and/or per a carrier, and/or per an SL transmit priority, and/or per a representative transmit power value (range), and/or per a congestion control level.

Various embodiments of the present disclosure may be applied in different combinations of the above, for example, depending on whether the transmissions are within or outside the COT (channel occupancy time). Various embodiments of the present disclosure may be applied in the different combinations differently according to the form of the COT (e.g., semi-static or time-varying). For example, in a semi-static COT, the absence of other technologies sharing the same channel or RB set may be guaranteed for a period of time, such as by regulation. For example, in the semi-static COT for SL transmission, the absence of DL and/or UL transmissions sharing the same channel or RB set for a certain period of time may be guaranteed, such as by regulation. For example, in the semi-static COT, the absence of SL transmission sharing the same channel or RB set may be guaranteed for a certain period of time, such as for DL and/or UL transmission. For example, in the semi-static COT, the absence of SL transmissions based on SL mode 2 resource (re)selection sharing the same channel or RB set for a certain period of time may be guaranteed, such as by regulation.

For example, the length of the fixed-frame period (FFP) and/or the time axis offset value for the semi-static COT duration may be (pre-)configured per resource pool and/or per SL BWP and/or per carrier and/or per an RB set and/or per congestion control level and/or per SL transmit priority value. For example, the length of the fixed-frame period (FFP) and/or the time axis offset value for the semi-static COT duration may be configured via PC5-RRC signaling between UEs. For example, the (pre-)configured FFP may be overwritten via the PC5-RRC signaling. For example, the FFP configured to the PC5-RRC may be used limitedly for unicast transmission corresponding to the PC5-RRC connection. Various embodiments of the present disclosure may be applied in the form of different combinations of the above, according to different carriers, with or without guards between RB sets, or according to regulations.

While various embodiments of the present disclosure describe changing the contention window size for all CAPCs, the ideas of the present disclosure may be extended to include changing the contention window size per specific CAPC or SL priority value.

In various embodiments of the present disclosure, for example, the scheme may be applied differently per SL channel, depending on the type of channel access and whether/how it is indicated. In various embodiments of the present disclosure, for example, with respect to the type of channel access and whether/how to indicate, the above scheme may be applied differently depending on the type of information included in the SL channel.

For example, the proposed method may be applied to devices described below. First, a processor 202 of a receiving UE may configure at least one BWP. Then, the processor 202 of the receiving UE may control a transceiver 206 of the receiving UE to receive a sidelink-related physical channel and/or a sidelink-related reference signal from the transmitting UE over the at least one BWP.

To secure transmission opportunities in an unlicensed band (i.e., shared spectrum), channel occupancy time (COT) is used. A transmitting UE may inform via COT duration information that it will occupy the channel secured through normal channel sensing for a certain period of time, or may receive COT duration information from a COT initiating UE, and may perform a type 2 LBT operation for the (preferentially) selected transmission resources within the COT to perform transmission operations in an unlicensed band. For resources outside the COT, the transmission resource may perform the transmission operation by performing a type 1 LBT operation based on random backoff.

For example, if the channel occupancy (CO) sharing information field is always present in second SCI (SCI transmitted via PSSCH; may include SCI formats 2-A, 2-B, 2-C, 2-D, etc.) regardless of whether the UE actually shares the CO it generates/obtains with other UEs (i.e., if the traditional SL (data) communication field and the CO sharing information field are always present in second SCI), the payload size of the second SCI may increase unnecessarily and cause performance degradation issues.

Furthermore, for example, if a CO sharing information field is added to a second SCI format used for inter UE coordination (IUC) operation (i.e., SCI format 2-C), the total payload of the second SCI may exceed the maximum payload size that the second SCI can support. In addition, if a CO sharing information field with unnecessarily large payload size is added on second SCI, it may cause excessive degradation compared to the coverage/decoding performance supported by a second SCI consisting of only traditional SL (data) communication fields.

Also, for example, since a CO sharing information transmission is always performed in the form of PSCCH/PSSCH, a method of utilizing the (LBT successful) RB set information related to the corresponding PSCCH/PSSCH transmission as part of the COT sharing information may be required.

According to various embodiments of the present disclosure, for example, in SL communication in an unlicensed band, first SCI (i.e., the SCI transmitted through PSCCH) may include a field related to whether a COT sharing operation is performed.

For example, if the value of the field related to whether a COT sharing operation is performed in the first SCI is 1 (i.e., the COT sharing operation is performed), then the second SCI includes a field related to COT sharing information, and the second SCI may not include a field related to IUC information. That is, for example, a field indicating whether the CO sharing information field exists on the second SCI may be further defined on the first SCI.

For example, the RB set on which the COT sharing operation is performed and the RB set of the COT actually used for PSCCH/PSSCH transmission by a second device may be the same, i.e., information for the RB set(s) on which the CO is shared (i.e., the RB set(s) on which PSCCH/PSSCH transmission will be performed based on the CO) may be considered (implicitly) as the RB set(s) on which PSCCH/PSSCH including the CO sharing information is transmitted.

For example, an IUC information field and a CO sharing information field may not exist on one second SCI at the same time, i.e., an IUC information field may exist on second SCI only if the CO sharing information field on the first SCI indicates that no COT sharing information is provided on the second SCI.

For example, according to various embodiments of the present disclosure, the following effects may occur Although the payload of the second SCI is limited, embodiments of the present disclosure may compensate for the lack of payload of the second SCI by conditionally varying the types of fields included in the second SCI.

Specifically, according to various embodiments of the present disclosure, performance degradation issues that may result from unnecessarily increasing the payload size of the second SCI may be addressed, excessive degradation compared to the coverage/decoding performance supported by a second SCI comprising only conventional SL (data) communication fields may be prevented, and by ensuring that the shared COT-based transmission is performed on the same RB set as the RB set on which the CO sharing information transmission is performed, RB set information may be delivered without the need to include additional RB set information in the CO sharing information being transmitted.

According to one embodiment of the present disclosure, SCI format 1-A may be used for scheduling PSSCH and second stage SCI on PSSCH. For example, COT sharing flag information may be transmitted via SCI format 1-A. For example, the number of bits of the COT sharing flag information may be determined as 0 or 1 bit. For example, the number of bits of the COT sharing flag information may be determined to be 1 bit when a parameter (e.g., transmissionStructureForPSCCHandPSSCH in SL-BWP-Config) related to whether communication based on shared spectrum is to be performed from the higher layer is configured. For example, if the parameter is not configured, the number of bits of the COT sharing flag information may be determined to be zero. For example, in the present disclosure, SCI format 1-A may be interchangeable/substitutable with the first SCI.

For example, based on CSI format 1-A above, a second stage SCI format may be determined, which may refer to Table 18 below.

**[Table 18]**

| A value of a second stage SCI format field | A second stage SCI format |
|---|---|
| 00 | SCI format 2-A |
| 01 | SCI format 2-B; or when the higher layer parameter; transmissionStructureForPSCCHandPSSCH in SL-BWP-Config is configured, 'reserved' |
| 10 | SCI format 2-C; or when the higher layer parameter; transmissionStructureForPSCCHandPSSCH in SL-BWP-Config is configured, and a COT sharing flag field is set to 1 |
| 11 | SCI format 2-D; or when the higher layer parameter; transmissionStructureForPSCCHandPSSCH is SL-BWP-Config is configured, 'reserved' |

For example, SCI format 2-A may be used for decoding PSSCH along with a HARQ operation when the HARQ-ACK information includes an ACK or NACK, or when there is no feedback of HARQ-ACK information. For example, if the COT sharing flag field in SCI format 1-A is present and set to 1, the CAPC field, the COT sharing cast type field, the COT sharing additional ID field, and the remaining COT duration field may be configured in SCI format 2-A.

For example, the number of bits in the CAPC field may be 2 bits, and the values may be 00, 01, 10, and 11, corresponding to 1, 2, 3, and 4, respectively.

For example, the number of bits in the COT sharing cast type field may be 2 bits.

For example, the number of bits in the COT sharing additional ID field may be 24 bits. Here, 16 LSBs may provide the L1 destination ID and 8 MSBs may provide the L1 source ID. For example, if the COT sharing cast type field is set to 00 or 01, the 8 MSBs are 'reserved'.

For example, the number of bits in the remaining COT duration field might be FLOOR(log₂(10*2^{u}) bits. Here, the FLOOR function outputs the smallest integer that is greater than the input. For example, u may be a parameter related to the SCS.

For example, if a UE provides CO sharing information via a unicast (or groupcast, or broadcast) PSCCH/PSSCH transmission within an RB set, a UE receiving the CO sharing information may perform a unicast (or groupcast, or broadcast) PSCCH/PSSCH transmission sharing the shared CO within the RB set.

For example, if a UE provides CO sharing information via a PSCCH/PSSCH transmission within an RB set, a UE receiving the CO sharing information may perform S-SSB/PSFCH transmission sharing the shared CO within the RB set.

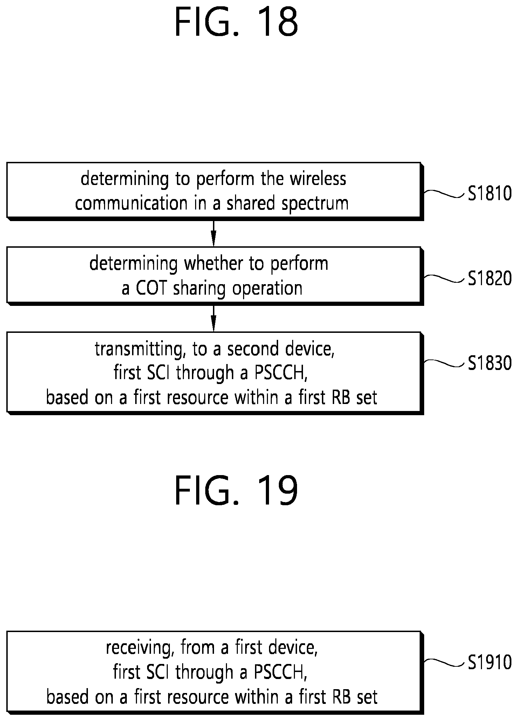

FIG. 18 shows a procedure for a first device to perform wireless communication, according to one embodiment of the present disclosure. The embodiment of FIG. 18 may be combined with various embodiments of the present disclosure.

Referring to FIG. 18, in step S1810, a first device may determine to perform the wireless communication in a shared spectrum. For example, first sidelink control information, SCI, may include a field related to whether a channel occupancy time, COT, sharing operation is performed, based on the wireless communication being determined to be performed in the shared spectrum. In step S1820, the first device may determine whether to perform the COT sharing operation. For example, a value of the field related to whether the COT sharing operation is performed may be set to 1, based on the COT sharing operation being determined to be performed. In step S1830, the first device may transmit, to a second device, the first SCI through a physical sidelink control channel, PSCCH, based on a first resource within a first resource block, RB, set.

For example, additionally, the first device may transmit, to the second device, second SCI through a physical sidelink shared channel, PSSCH, based on a second resource within at least one second RB set including the first RB set. For example, the second SCI may include at least one field related to information for a COT, based on the value of the field related to whether the COT sharing operation is performed being set to 1.

For example, the second SCI may include information for the COT within at least one third RB set, and the information for the COT may be transmitted through the at least one field related to the information for the COT.

For example, the second SCI may not include a field related to inter UE coordination, IUC, information, based on the second SCI including the information for the COT.

For example, additionally, the first device may obtain the information for the COT. For example, the COT may be obtained from a base station or a third device.

For example, additionally, the first device may obtain the information for the COT. For example, the COT may be generated by the first device based on channel sensing for a channel access procedure, CAP, for the second RB set.

For example, the second SCI may include a first source layer 1, L1, ID and a first destination L1 ID, and the information for the COT may be used by the second device to perform at least one of a PSCCH transmission or a PSSCH transmission, based on: the first source L1 ID being the same as a second destination L1 ID of the second device, and the first destination L1 ID being the same as a second source L1 ID of the second device; or the first destination L1 ID being the same as the second destination L1 ID of the second device.

For example, the at least one second RB set on which a transmission through the PSSCH is based may be the same as the at least one third RB set related to the COT.

For example, the at least one field may include a field related to a channel access priority class, CAPC, value related to the COT, a field related to a cast type related to the COT sharing operation, a field related to a layer 1, L1, ID related to the COT sharing operation, and a field related to a remaining COT duration related to the COT.

For example, the L1 ID may be an additional ID related to a third device different from the second device.

For example, additionally, the first device may perform channel sensing for a CAP for a first RB set. For example, the first SCI may be transmitted based on a result of the channel sensing being IDLE.

For example, the field related to whether the COT sharing operation is performed may be a COT sharing flag field.

For example, the wireless communication may be determined to be performed in the shared spectrum, by a higher layer.

The embodiments described above may be applied to various devices described below. First, a processor 102 of a first device 100 may determine to perform the wireless communication in a shared spectrum. For example, first sidelink control information, SCI, may include a field related to whether a channel occupancy time, COT, sharing operation is performed, based on the wireless communication being determined to be performed in the shared spectrum. And, the processor 102 of the first device 100 may determine whether to perform the COT sharing operation. For example, a value of the field related to whether the COT sharing operation is performed may be set to 1, based on the COT sharing operation being determined to be performed. And, the processor 102 of the first device 100 may control a transceiver 106 to transmit, to a second device 200, the first SCI through a physical sidelink control channel, PSCCH, based on a first resource within a first resource block, RB, set.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: determining to perform the wireless communication in a shared spectrum, wherein first sidelink control information, SCI, may include a field related to whether a channel occupancy time, COT, sharing operation is performed, based on the wireless communication being determined to be performed in the shared spectrum; determining whether to perform the COT sharing operation, wherein a value of the field related to whether the COT sharing operation is performed may be set to 1, based on the COT sharing operation being determined to be performed; and transmitting, to a second device, the first SCI through a physical sidelink control channel, PSCCH, based on a first resource within a first resource block, RB, set.

For example, additionally, the first device may transmit, to the second device, second SCI through a physical sidelink shared channel, PSSCH, based on a second resource within at least one second RB set including the first RB set. For example, the second SCI may include at least one field related to information for a COT, based on the value of the field related to whether the COT sharing operation is performed being set to 1.

For example, the second SCI may include information for the COT within at least one third RB set, and the information for the COT may be transmitted through the at least one field related to the information for the COT.

For example, the second SCI may not include a field related to inter UE coordination, IUC, information, based on the second SCI including the information for the COT.

For example, additionally, the operations may further comprise: obtaining the information for the COT. For example, the COT may be obtained from a base station or a third device.

For example, additionally, the operations may further comprise: obtaining the information for the COT. For example, the COT may be generated by the first device based on channel sensing for a channel access procedure, CAP, for the second RB set.

For example, the second SCI may include a first source layer 1, L1, ID and a first destination L1 ID, and the information for the COT may be used by the second device to perform at least one of a PSCCH transmission or a PSSCH transmission, based on: the first source L1 ID being the same as a second destination L1 ID of the second device, and the first destination L1 ID being the same as a second source L1 ID of the second device; or the first destination L1 ID being the same as the second destination L1 ID of the second device.

For example, the at least one second RB set on which a transmission through the PSSCH is based may be the same as the at least one third RB set related to the COT.

For example, the at least one field may include a field related to a channel access priority class, CAPC, value related to the COT, a field related to a cast type related to the COT sharing operation, a field related to a layer 1, L1, ID related to the COT sharing operation, and a field related to a remaining COT duration related to the COT.

For example, the L1 ID may be an additional ID related to a third device different from the second device.

For example, additionally, the operations may further comprise: performing channel sensing for a CAP for a first RB set. For example, the first SCI may be transmitted based on a result of the channel sensing being IDLE.

For example, the field related to whether the COT sharing operation is performed may be a COT sharing flag field.

For example, the wireless communication may be determined to be performed in the shared spectrum, by a higher layer.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations, wherein the operations may comprise: determining to perform the wireless communication in a shared spectrum, wherein first sidelink control information, SCI, may include a field related to whether a channel occupancy time, COT, sharing operation is performed, based on the wireless communication being determined to be performed in the shared spectrum; determining whether to perform the COT sharing operation, wherein a value of the field related to whether the COT sharing operation is performed may be set to 1, based on the COT sharing operation being determined to be performed; and transmitting, to a second UE, the first SCI through a physical sidelink control channel, PSCCH, based on a first resource within a first resource block, RB, set.

According to an embodiment of the present disclosure, a non-transitory computer-readable storage medium storing instructions may be proposed. For example, the instructions, based on being executed, may cause a first device to: determine to perform the wireless communication in a shared spectrum, wherein first sidelink control information, SCI, may include a field related to whether a channel occupancy time, COT, sharing operation is performed, based on the wireless communication being determined to be performed in the shared spectrum; determine whether to perform the COT sharing operation, wherein a value of the field related to whether the COT sharing operation is performed may be set to 1, based on the COT sharing operation being determined to be performed; and transmit, to a second device, the first SCI through a physical sidelink control channel, PSCCH, based on a first resource within a first resource block, RB, set.

FIG. 19 shows a procedure for a first device to perform wireless communication, according to one embodiment of the present disclosure. The embodiment of FIG. 19 may be combined with various embodiments of the present disclosure.

Referring to FIG. 19, in step S1910, a second device may receive, from a first device, first sidelink control information, SCI, through a physical sidelink control channel, PSCCH, based on a first resource within a first resource block, RB, set. For example, the wireless communication may be performed in a shared spectrum, and the first SCI may include a field related to whether a channel occupancy time, COT, sharing operation is performed, based on the wireless communication being determined to be performed in the shared spectrum.

For example, additionally, the second device may receive, from the first device, second SCI through a physical sidelink shared channel, PSSCH, based on a second resource within at least one second RB set including the first RB set; and performing, to the first device, a PSCCH transmission or a PSSCH transmission, based on a third resource within a COT. For example, the second SCI may include at least one field related to information for the COT, based on a value of the field related to whether the COT sharing operation is performed being 1, and the second SCI may include the information for the COT within the at least one second RB set.

The embodiments described above may be applied to various devices described below. First, a processor 202 of a second device 200 may control a transceiver 206 to receive, from a first device 100, first sidelink control information, SCI, through a physical sidelink control channel, PSCCH, based on a first resource within a first resource block, RB, set. For example, the wireless communication may be performed in a shared spectrum, and the first SCI may include a field related to whether a channel occupancy time, COT, sharing operation is performed, based on the wireless communication being determined to be performed in the shared spectrum.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, first sidelink control information, SCI, through a physical sidelink control channel, PSCCH, based on a first resource within a first resource block, RB, set, wherein the wireless communication may be performed in a shared spectrum, and wherein the first SCI may include a field related to whether a channel occupancy time, COT, sharing operation is performed, based on the wireless communication being determined to be performed in the shared spectrum.

For example, the operations may further comprise: receiving, from the first device, second SCI through a physical sidelink shared channel, PSSCH, based on a second resource within at least one second RB set including the first RB set; and performing, to the first device, a PSCCH transmission or a PSSCH transmission, based on a third resource within a COT. For example, the second SCI may include at least one field related to information for a COT, based on a value of the field related to whether the COT sharing operation is performed being 1, and the second SCI may include the information for the COT within the at least one second RB set.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

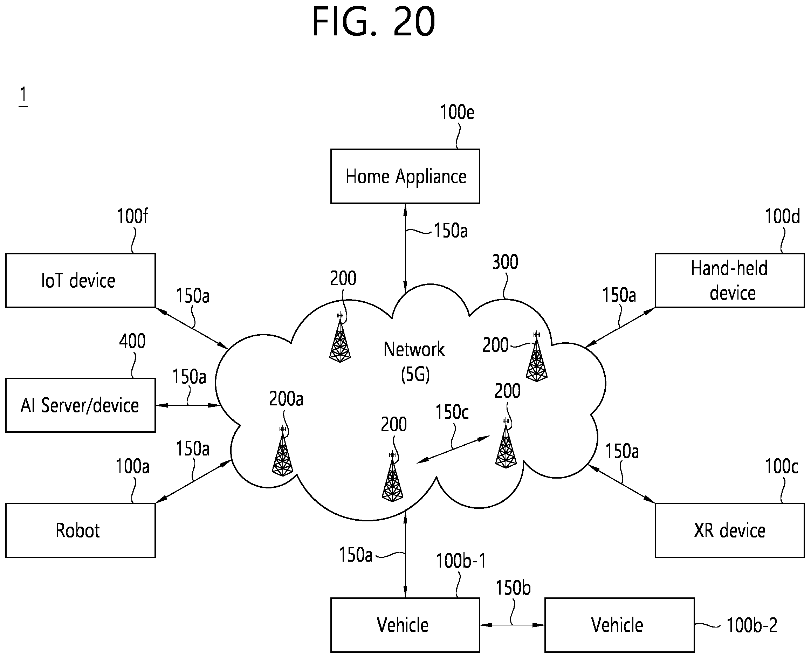

FIG. 20 shows a communication system 1, based on an embodiment of the present disclosure. The embodiment of FIG. 20 may be combined with various embodiments of the present disclosure.

Referring to FIG. 20, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

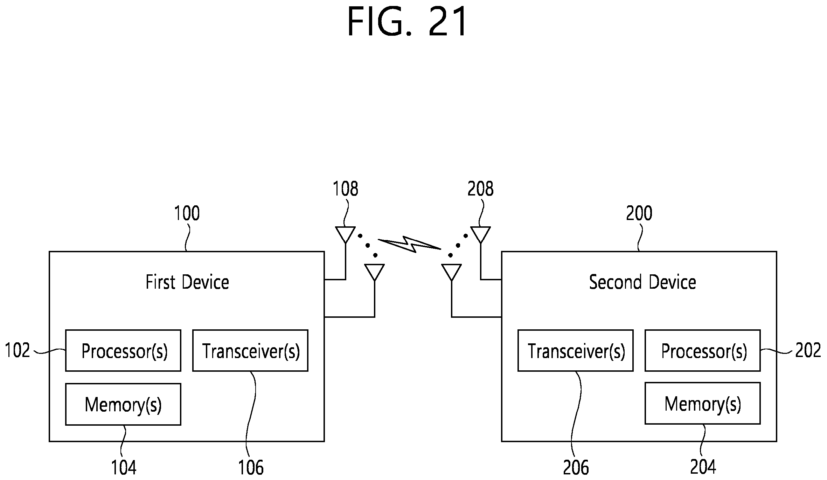

FIG. 21 shows wireless devices, based on an embodiment of the present disclosure. The embodiment of FIG. 21 may be combined with various embodiments of the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

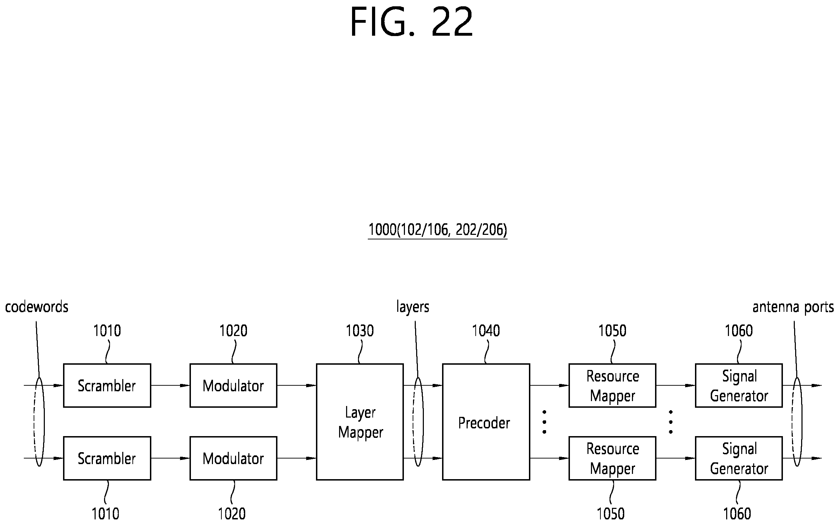

FIG. 22 shows a signal process circuit for a transmission signal, based on an embodiment of the present disclosure. The embodiment of FIG. 22 may be combined with various embodiments of the present disclosure.

Referring to FIG. 22, a signal processing circuit 1000 may include scramblers 1010, modulators 1020, a layer mapper 1030, a precoder 1040, resource mappers 1050, and signal generators 1060. An operation/function of FIG. 22 may be performed, without being limited to, the processors 102 and 202 and/or the transceivers 106 and 206 of FIG. 21. Hardware elements of FIG. 22 may be implemented by the processors 102 and 202 and/or the transceivers 106 and 206 of FIG. 21. For example, blocks 1010 to 1060 may be implemented by the processors 102 and 202 of FIG. 21. Alternatively, the blocks 1010 to 1050 may be implemented by the processors 102 and 202 of FIG. 21 and the block 1060 may be implemented by the transceivers 106 and 206 of FIG. 21.

Codewords may be converted into radio signals via the signal processing circuit 1000 of FIG. 22. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 22. For example, the wireless devices (e.g., 100 and 200 of FIG. 21) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

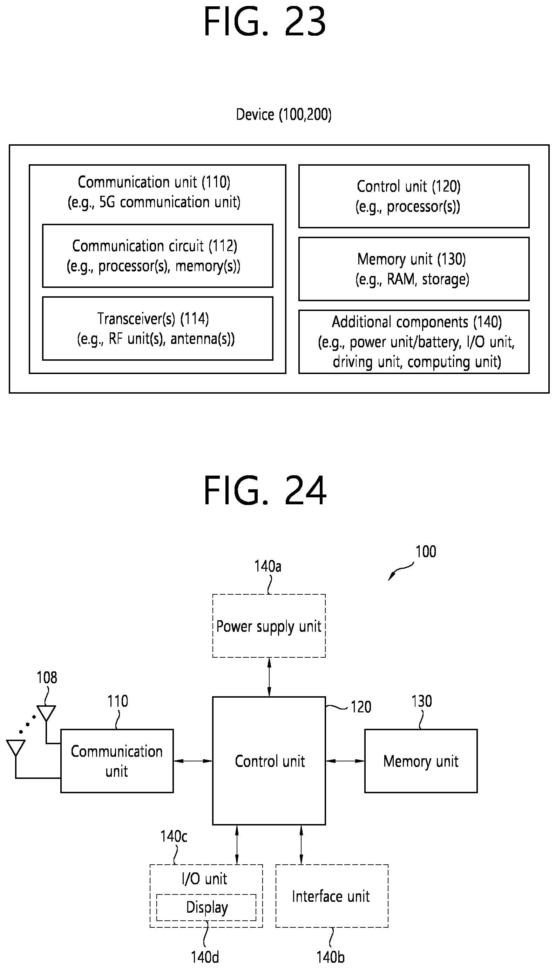

FIG. 23 shows another example of a wireless device, based on an embodiment of the present disclosure. The wireless device may be implemented in various forms according to a use-case/service (refer to FIG. 20). The embodiment of FIG. 23 may be combined with various embodiments of the present disclosure.

Referring to FIG. 23, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

FIG. 24 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 24 may be combined with various embodiments of the present disclosure.

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

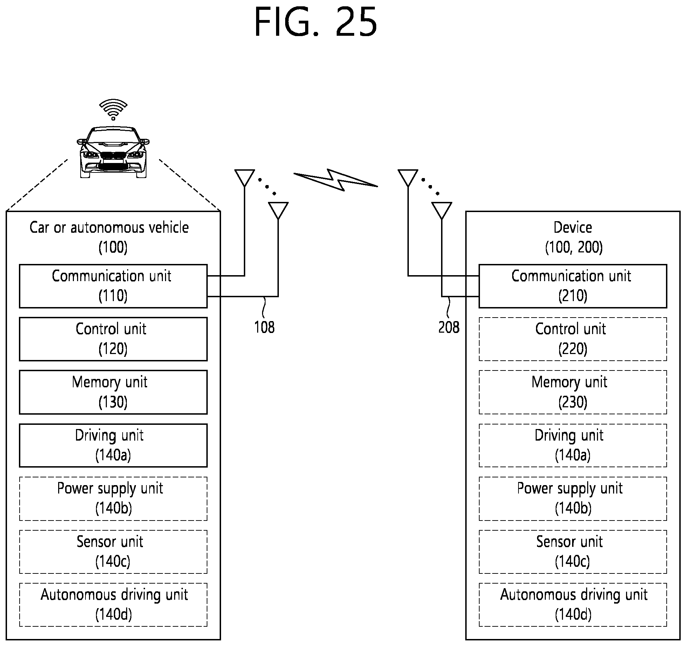

FIG. 25 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 25 may be combined with various embodiments of the present disclosure.

Referring to FIG. 25, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
determining to perform the wireless communication in a shared spectrum,
wherein first sidelink control information, SCI, includes a field related to whether a channel occupancy time, COT, sharing operation is performed, based on the wireless communication being determined to be performed in the shared spectrum,
determining whether to perform the COT sharing operation,
wherein a value of the field related to whether the COT sharing operation is performed is set to 1, based on the COT sharing operation being determined to be performed; and
transmitting, to a second device, the first SCI through a physical sidelink control channel, PSCCH, based on a first resource within a first resource block, RB, set.

2. The method of claim 1, further comprising:
transmitting, to the second device, second SCI through a physical sidelink shared channel, PSSCH, based on a second resource within at least one second RB set including the first RB set,
wherein the second SCI includes at least one field related to information for a COT, based on the value of the field related to whether the COT sharing operation is performed being set to 1.

3. The method of claim 2, wherein the second SCI includes information for the COT within at least one third RB set, and
wherein the information for the COT is transmitted through the at least one field related to the information for the COT.

4. The method of claim 3, wherein the second SCI does not include a field related to inter UE coordination, IUC, information, based on the second SCI including the information for the COT.

5. The method of claim 3, further comprising:
obtaining the information for the COT,
wherein the COT is obtained from a base station or a third device.

6. The method of claim 3, further comprising:
obtaining the information for the COT,
wherein the COT is generated by the first device based on channel sensing for a channel access procedure, CAP, for the second RB set.

7. The method of claim 3, wherein the second SCI includes a first source layer 1, L1, ID and a first destination L1 ID, and
wherein the information for the COT is used by the second device to perform at least one of a PSCCH transmission or a PSSCH transmission, based on:
the first source L1 ID being the same as a second destination L1 ID of the second device, and the first destination L1 ID being the same as a second source L1 ID of the second device, or
the first destination L1 ID being the same as the second destination L1 ID of the second device.

8. The method of claim 3, wherein the at least one second RB set on which a transmission through the PSSCH is based is the same as the at least one third RB set related to the COT.

9. The method of claim 2, wherein the at least one field includes a field related to a channel access priority class, CAPC, value related to the COT, a field related to a cast type related to the COT sharing operation, a field related to a layer 1, L1, ID related to the COT sharing operation, and a field related to a remaining COT duration related to the COT.

10. The method of claim 9, wherein the L1 ID is an additional ID related to a third device different from the second device.

11. The method of claim 1, further comprising:
performing channel sensing for a CAP for a first RB set,
wherein the first SCI is transmitted based on a result of the channel sensing being IDLE.

12. The method of claim 1, wherein the field related to whether the COT sharing operation is performed is a COT sharing flag field.

13. The method of claim 1, wherein the wireless communication is determined to be performed in the shared spectrum, by a higher layer.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
determining to perform the wireless communication in a shared spectrum,
wherein first sidelink control information, SCI, includes a field related to whether a channel occupancy time, COT, sharing operation is performed, based on the wireless communication being determined to be performed in the shared spectrum;
determining whether to perform the COT sharing operation,
wherein a value of the field related to whether the COT sharing operation is performed is set to 1, based on the COT sharing operation being determined to be performed; and
transmitting, to a second device, the first SCI through a physical sidelink control channel, PSCCH, based on a first resource within a first resource block, RB, set.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
determining to perform the wireless communication in a shared spectrum,
wherein first sidelink control information, SCI, includes a field related to whether a channel occupancy time, COT, sharing operation is performed, based on the wireless communication being determined to be performed in the shared spectrum;
determining whether to perform the COT sharing operation,
wherein a value of the field related to whether the COT sharing operation is performed is set to 1, based on the COT sharing operation being determined to be performed; and
transmitting, to a second UE, the first SCI through a physical sidelink control channel, PSCCH, based on a first resource within a first resource block, RB, set.

16. A non-transitory computer-readable storage medium storing instructions that, based on being executed, cause a first device to:
determine to perform the wireless communication in a shared spectrum,
wherein first sidelink control information, SCI, includes a field related to whether a channel occupancy time, COT, sharing operation is performed, based on the wireless communication being determined to be performed in the shared spectrum;
determine whether to perform the COT sharing operation,
wherein a value of the field related to whether the COT sharing operation is performed is set to 1, based on the COT sharing operation being determined to be performed; and
transmit, to a second device, the first SCI through a physical sidelink control channel, PSCCH, based on a first resource within a first resource block, RB, set.

17. A method for performing, by a second device, wireless communication, the method comprising:
receiving, from a first device, first sidelink control information, SCI, through a physical sidelink control channel, PSCCH, based on a first resource within a first resource block, RB, set,
wherein the wireless communication is performed in a shared spectrum, and
wherein the first SCI includes a field related to whether a channel occupancy time, COT, sharing operation is performed, based on the wireless communication being determined to be performed in the shared spectrum.

18. The method of claim 17, further comprising:
receiving, from the first device, second SCI through a physical sidelink shared channel, PSSCH, based on a second resource within at least one second RB set including the first RB set,
wherein the second SCI includes at least one field related to information for a COT, based on a value of the field related to whether the COT sharing operation is performed being 1, and
wherein the second SCI includes the information for the COT within the at least one second RB set; and
performing, to the first device, a PSCCH transmission or a PSSCH transmission, based on a third resource within the COT.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
receiving, from a first device, first sidelink control information, SCI, through a physical sidelink control channel, PSCCH, based on a first resource within a first resource block, RB, set,
wherein the wireless communication is performed in a shared spectrum, and
wherein the first SCI includes a field related to whether a channel occupancy time, COT, sharing operation is performed, based on the wireless communication being determined to be performed in the shared spectrum.

20. The second device of claim 19, wherein the operations further comprise:
receiving, from the first device, second SCI through a physical sidelink shared channel, PSSCH, based on a second resource within at least one second RB set including the first RB set,
wherein the second SCI includes at least one field related to information for a COT, based on a value of the field related to whether the COT sharing operation is performed being 1, and
wherein the second SCI includes the information for the COT within the at least one second RB set; and
performing, to the first device, a PSCCH transmission or a PSSCH transmission, based on a third resource within the COT.
